# FASCICULE DE BREVET EUROPEEN

(11) **EP 0 924 898 B1**
(45) Date de publication et mention de la délivrance du brevet: **17.09.2008**
(21) Numéro de dépôt: 98403151.8
(22) Date de dépôt: 14.12.1998
(51) Int. Cl.: H04L 12/28, H04L 12/46

(54) **Dispositif d'interconnexion entre segments de réseaux communiquant selon des protocoles de formats différents, et procédé correspondant**
Vorrichtung und Verfahren zur Verbindung zwischen Netzsegmenten, die mit verschiedenen Protokollformaten kommunizieren
Apparatus and method for interconnection between network segments communicating according to protocols of miscellaneous formats

(30) Priorité: 15.12.1997 FR 9715870
(43) Date de publication de la demande: 23.06.1999
(73) Titulaire: INRIA INSTITUT NATIONAL DE RECHERCHE EN INFORMATIQUE ET EN AUTOMATIQUE, Rocquencourt F-78153 Le Chesnay (FR)
(72) Inventeur: Jacquet, Phillipe, 78530 Buc (FR); Muhlethaler, Paul, 78600 Maisons Laffitte (FR)
(74) Mandataire: Plaçais, Jean Yves

(56) Documents cités:
- EP-A- 0 599 764
- EP-A- 0 766 427
- EP-A- 0 766 490
- WO-A-97/37467
- US-A- 5 321 542
- US-A- 5 331 634
- US-A- 5 490 139
- US-A- 5 655 219

## Description

L'invention concerne le domaine des réseaux informatiques permettant des échanges de données et d'informations entre des postes ou stations de réseaux différents. On entend ici par réseaux différents, aussi bien plusieurs (au moins deux) réseaux radio pouvant fonctionner selon des canaux et/ou protocoles différents, ou bien une combinaison d'au moins un réseau radio et d'au moins un réseau filaire (câbles électriques ou fibres optiques). Le document US 5655219 décrit un réseau local sans fil pourvu de stations de base à liaison filaire.

Dans le cas d'une combinaison de réseaux radio et filaire (ou câblé), des postes mobiles coexistent avec des postes fixes raccordés au câble via des dispositifs d'interconnexion (ou ponts), d'un module de mémorisation qui stocke au moins une table de routage, et un module de traitement (ou d'aiguillage) qui gère des échanges de données en fonction de la table de routage.

Bien entendu, de tels dispositifs d'interconnexion (ou ponts) sont généralement munis d'interfaces-réseaux (une pour chaque segment de réseau), les différentes interfaces-réseaux pouvant présenter des parties éventuellement communes. Dans ce cas, le module de traitement (ou d'aiguillage) gère les échanges de données au niveau des interfaces-réseau, en fonction de ladite table de routage.

L'invention concerne plus particulièrement les dispositifs d'interconnexion (ou ponts) entre au moins des segments d'un réseau dit "principal" (dont un poste à émis un message destiné à au moins un autre poste du même réseau) communiquant par voie de messages munis d'une capsule dite principale répondant à un protocole fondé sur un premier format et au moins un segment d'au moins un réseau "auxiliaire" communiquant par voie de messages munis d'une capsule auxiliaire répondant à un protocole fondé sur un second format.

Dans ce qui suit on appellera "message encapsulé" un message constitué de données et d'une "capsule" contenant des informations propres au format du réseau concerné.

Par ailleurs, on entend par pont un dispositif assurant le transfert d'un message d'un réseau vers un ou plusieurs autres réseaux. De tels ponts peuvent être de simples répéteurs lorsqu'ils ne servent qu'à relayer des trames (ou paquets) de données. Mais, dans certains cas, il peut s'agir de ponts dits "intelligents" qui peuvent constituer ce que l'homme de l'art appelle des "arbres couvrants". Or, dans certaines conditions de fonctionnement, de tels ponts intelligents peuvent bloquer momentanément la transmission des messages, interdisant toute liaison entre deux abonnés d'un même réseau. C'est notamment le cas lorsque, lors de la répétition d'un message sur un tronçon (filaire), un pont intelligent estime que la source dudit message est une station fixe du tronçon, et qu'il faut, par conséquent, filtrer les messages (ou bloquer une direction de transmission) pendant un certain temps, ce qui interdit l'accès à ladite source.

Cet inconvénient est particulièrement gênant lorsqu'un poste mobile (d'un réseau radio) est amené à changer de tronçon (filaire) pour communiquer avec le reste de l'installation de transmission de données à laquelle il appartient.

En effet, dans ce type d'installation, les postes mobiles et d'interconnexion (ou de relais) comprennent généralement une mémoire dans laquelle se trouve stockée une table de routage qui permet à leur module de traitement de déterminer le chemin optimal pour atteindre le ou les postes concernés par le message qu'ils viennent de recevoir. Or, pour permettre la mise à jour des tables de routage, les postes mobiles et d'interconnexion échangent des messages dits "de service" qui signalent les déplacements des différents postes mobiles, les uns par rapport aux autres et relativement à des tronçons.

Par ailleurs, les ponts reçoivent des messages des postes mobiles, qu'ils transmettent ensuite sur le réseau filaire sans réelle modification, du fait que les ponts assimilent ces postes mobiles à des postes fixes du réseau filaire. En conséquence, dès qu'un poste mobile se déplace, cela pose un réel problème qui peut déboucher, soit sur un blocage d'un tronçon de réseau par un pont; un ou plusieurs postes mobiles ne pouvant plus communiquer avec des postes distants, soit sur l'impossibilité de déterminer le chemin optimal qui va permettre à un poste mobile de communiquer avec un poste distant. Ceci pourrait se produire avec des ponts "intelligents".

L'invention a donc pour but de procurer un dispositif d'interconnexion qui ne présente pas les inconvénients précités.

Elle propose à cet effet un dispositif d'interconnexion du type décrit dans l'introduction, dans lequel le module de traitement comprend un module de gestion propre, d'une part, à désencapsuler un message reçu dudit réseau principal (retirer sa capsule principale) de façon à en extraire des informations de routage, puis à comparer ces informations à la table de routage mémorisée pour choisir, parmi les réseaux principal et auxiliaire(s), au moins un segment de réseau de réémission pour le message désencapsulé, et d'autre part, à adjoindre audit message désencapsulé avant sa réémission une capsule principale ou une capsule mixte, comportant une capsule principale et une capsule auxiliaire, selon que le réseau de réémission choisi est le réseau principal ou un réseau auxiliaire, de façon à réémettre le message réencapsulé dans le segment du réseau de réémission choisi. Le module de gestion est propre à adjoindre au message réencapsulé un code de protocole désignant le format du segment du réseau principal dont est issu ledit message reçu.

Ainsi, grâce au dispositif d'interconnexion (ou poste hybride) selon l'invention, il est possible de transformer plusieurs réseaux indépendants les uns des autres en un super-réseau dans lequel les messages peuvent transiter d'un segment d'un réseau principal à un autre segment de ce réseau principal, via un segment d'un réseau auxiliaire qui sert en quelque sorte de "passerelle".

Selon l'invention, le module de gestion est agencé pour adjoindre au message réencapsulé à réémettre un code de protocole désignant le format du segment de réseau principal dont est issu ce message.

Cela permet de garder une trace du réseau d'origine (principal) du message à transmettre, et par conséquent de renseigner les tables de routage des stations hybrides (ou dispositif d'interconnexion) sur les postes accessibles par ce réseau. Cela est particulièrement avantageux lorsque, notamment, des réseaux principaux de mêmes types (ou des segments d'un réseau principal) sont isolés les uns des autres, en raison de leur éloignement ou bien d'obstacles.

Le dispositif d'interconnexion selon l'invention est plus particulièrement adapté aux réseaux principaux et auxiliaires respectivement de types réseau radio et réseau filaire (ou câblé). Le réseau filaire, autorisant des vitesses de transmission supérieures, on peut donc s'en servir en tant que raccourci. Mais le dispositif peut également permettre de relier entre eux des segments de réseaux radio pouvant fonctionner selon des canaux respectifs différents ou sensiblement identiques.

Lorsque les réseaux principal et auxiliaire sont deux réseaux radio fonctionnant sur le même canal, mais avec des protocoles différents, l'architecture de leurs deux interfaces-réseaux (dans l'hypothèse où le dispositif d'interconnexion en possède une pour chaque réseau) pourra fusionner au moins partiellement en une interface physique avec l'éther (milieu de communication).

Bien entendu, un dispositif d'interconnexion (ou station hybride) peut permettre la liaison de plus de deux réseaux, par exemple trois, ou bien quatre, ou plus encore, qu'ils soient tous de type radio, ou bien de types radio et filaires (mixte)

Selon encore une autre caractéristique de l'invention, le format d'un réseau radio peut être choisi parmi au moins les normes "HIPERLAN" et IEEE 802.11, et le format d'un réseau filaire peut être choisi parmi au moins les normes IEEE 802.3, 802.5 et ANSI FDDI.

Le format HIPERLAN est notamment décrit dans les publications de l'Institut européen de standardisation (ETSI) et plus particulièrement dans le "technical standart ETS-300-652".

Dans le cas de la norme IEEE 802.11, le dispositif pourra être situé en interface avec un système de distribution (terminologie de cette norme), dans le point d'accès ("Acces Point AP"), et le cas échéant, ce système de distribution pourra être supporté par la même interface radio que les jeux de service de base BSS (pour "Basic Service Set", selon cette même terminologie), sans nécessairement partager les mêmes canaux. Préférentiellement, et afin de simplifier "l'architecture" physique des stations et améliorer la connectivité du réseau, le système de distribution sans fil pourra adopter les mêmes canaux que les services de base, ou bien les mêmes codes synchronisés de sauts de fréquence.

Avantageusement, lorsqu'un message reçu par un dispositif récepteur doit être relayé par au moins un dispositif d'interconnexion éloigné, dit "intermédiaire", le module de gestion du dispositif récepteur peut placer l'adresse du dispositif intermédiaire dans la capsule du réseau auxiliaire de réémission qu'il a choisi. De plus, il est avantageux que les segments de réseau auxiliaire soient agencés pour permettre l'utilisation d'adresses de groupe désignant chacune un ensemble prédéterminé de dispositifs d'interconnexion.

De la sorte, il est possible de différencier sur un réseau auxiliaire filaire les postes fixes classiques des postes hybrides. Cela permet aux messages qui circulent dans le réseau filaire à destination des postes hybrides, d'être ignorés par les postes fixes classiques. Une adresse de groupe sert à diffuser des messages de service ou des données destinés à un sous-ensemble des postes connectés, par exemple les postes hybrides, sans affecter les autres postes, comme par exemple les postes fixes classiques. Pour l'échange de données en "point à point", on utilise les adresses individuelles classiques.

Selon encore une autre caractéristique, le module de gestion est agencé pour déterminer le format du réseau principal dans un message muni d'une capsule mixte, de sorte que les informations de routage de ce message ne soient analysées que si ce format est présent. Cela peut s'effectuer par détection du code de protocole. Cela permet que la distinction soit faite entre les messages provenant des postes fixes et devant être traités par des couches de protocole supérieures, et les messages provenant des postes hybrides et nécessitant un traitement de routage par le module de gestion récepteur.

Dans le cas de réseaux mixtes (radio/filaire(s)), il est particulièrement avantageux que le module de gestion soit capable d'extraire d'un message de service, issu du réseau principal (radio), des informations de service, relatives à des modifications de table de routage, de façon à mettre à jour cette table de routage. Cela permet de tenir compte de modifications de position des postes mobiles et donc de recalculer éventuellement les cheminements préférentiels entre les relais de transmission.

Mais, il est également très avantageux que le module de gestion soit capable de traiter des messages de service du réseau principal transitant par des segments de réseaux auxiliaires et notamment filaires. Dans ce cas un message de service "auxiliaire" sera formé du message de service du réseau principal et d'au moins une capsule auxiliaire. Par ailleurs, certains des messages de service pourront comporter une adresse de groupe. De même, le module de gestion pourra être agencé pour traiter des messages dits "à diffusion" destinés à plusieurs destinataires du réseau principal et transitant sur l'un au moins des réseaux auxiliaires en utilisant une adresse de groupe.

Un dispositif d'interconnexion pouvant être le destinataire d'un message, ou bien l'émetteur d'un message lorsqu'il comprend un étage de traitement supérieur, il est dans ces conditions particulièrement avantageux que le module de gestion soit capable de transmettre à un tel étage de traitement supérieur les données contenues dans un message arrivé à destination. L'idée ici décrite consiste à utiliser un réseau auxiliaire comme extension d'un réseau principal pour transmettre sur ce réseau auxiliaire des messages de service de sorte que les postes d'interconnexion puissent acquérir une connaissance au moins partielle de la topologie du réseau.

De même, le module de gestion doit pouvoir adjoindre à un message créé localement par un étage de traitement supérieur, une capsule principale ou une capsule mixte selon le segment de réseau de réémission déterminé en fonction de l'adresse de destination du message et de la table de routage, en vue de l'émission du message encapsulé dans le segment du réseau d'émission déterminé.

De préférence, le module de gestion est également capable de commander l'émission de messages de service, non seulement sur requête locale d'un étage supérieur, mais aussi en tant que relais de transmission entre dispositifs d'interconnexion éloignés, pour l'échange d'informations de routage permettant de mettre à jour les tables de routage de chacun. De tels messages de service seront destinés, de préférence, à l'échange d'informations de routage pour la mise à jour des tables de routage des dispositifs d'interconnexion.

Par ailleurs les moyens de traitement sont, de préférence, capable d'entretenir au moins une liste des postes des segments de réseau qu'ils reçoivent, et aptes à transmettre cette liste sous forme de message de service, ce qui leur permet réciproquement d'entretenir une liste des postes qui les reçoivent à partir des messages de service qu'ils reçoivent.

Les moyens de traitement sont, également de préférence, capables d'entretenir un directoire topologique désignant au moins une partie des postes avec lesquels ils peuvent communiquer, directement ou indirectement, et définissant le
ou les cheminements de cette communication, ce qui leur permet de se renseigner, et de renseigner les destinataires, sur l'état de symétrie des liens entre postes du réseau filaire.

L'invention propose également un procédé d'échange de données, via le dispositif d'interconnexion précité, entre au moins des segments d'un réseau "principal" communiquant par voie de messages munis d'une capsule principale répondant à un protocole fondé sur un premier format et au moins un segment d'au moins un réseau "auxiliaire" communiquant par voie de messages munis d'une capsule auxiliaire répondant à un protocole fondé sur un second format, procédé dans lequel on prévoit les étapes suivantes :
- retirer la capsule principale d'un message reçu par le dispositif d'interconnexion du réseau principal de façon à en extraire des informations de routage,
- comparer les informations extraites à la table de routage mémorisée pour choisir, parmi lesdits réseaux principal et auxiliaire(s), au moins un segment de réseau de réémission pour ledit message désencapsulé, et
- adjoindre au message désencapsulé une capsule principale ou une capsule mixte, comportant une capsule principale et une capsule auxiliaire, selon que le réseau de réémission choisi est le réseau principal ou un réseau auxiliaire, de façon à réémettre le message réencapsulé dans le segment du réseau de réémission choisi.

D'autres caractéristiques et avantages de l'invention apparaîtront à l'examen de la description détaillée ci-après, et des dessins annexés, sur lesquels :
- la figure 1 est un schéma très simplifié d'une installation mixte à réseaux radio et filaire équipée de postes hybrides selon l'invention;
- la figure 2 est un schéma très simplifié illustrant un poste hybride selon l'invention;
- les figures 3A à 3E illustrent des exemples de formats de trames respectivement de données d'un réseau radio, de données d'un réseau filaire classique, de données d'un réseau radio encapsulées pour un réseau filaire, de service de contrôle de voisinage d'un réseau radio, et de service de contrôle de voisinage d'un réseau radio encapsulé pour un réseau filaire;
- la figure 4 est un diagramme bloc de principe illustrant les principales étapes de traitement d'une trame reçue d'un réseau radio;
- la figure 5 est un diagramme bloc de principe illustrant les principales étapes de traitement d'une trame reçue d'un réseau filaire;
- la figure 6 est un diagramme bloc de principe illustrant les principales étapes de traitement du routage point à point;
- la figure 7 est un diagramme bloc de principe illustrant les principales étapes de traitement des trames de données multipoints;
- la figure 8 est un diagramme bloc de principe illustrant les principales étapes de traitement de données générées localement en vue de leur émission sous forme d'une trame;
- la figure 9 est un diagramme bloc de principe illustrant les principales étapes de traitement des trames de service associées au contrôle du voisinage;
- la figure 10 est un diagramme bloc de principe illustrant les principales étapes de génération et d'émission d'une trame de service associée au contrôle du voisinage; et
- la figure 11 est un diagramme bloc de principe illustrant les principales étapes de détermination de relais multipoints.

Les dessins annexés sont, pour l'essentiel, de caractère certain. En conséquence, ils pourront non seulement servir à compléter celle-ci, mais aussi contribuer à la définition de l'invention le cas échéant.

Le demandeur a décrit dans une précédente demande de Brevet FR 9509928, un réseau radio du type dit "à accès aléatoire", permettant de résoudre les problèmes de collision entre plusieurs postes pouvant émettre en même temps. Un tel réseau permet un routage dynamique qui repose sur des échanges de messages de service par diffusion.

Ces échanges permettent à certaines au moins des stations composant le réseau radio, ci-après appelées stations (ou postes) mobiles, d'acquérir une connaissance au moins partielle de la topologie du réseau à chaque instant. La Demande de Brevet précitée décrit, par ailleurs, un mécanisme de routage saut par saut entre les stations aptes au relayage, parmi les stations hybrides et mobiles, dans lequel chaque message, qu'il contienne des informations de service
ou des données, est encapsulé dans une trame spécifique contenant l'adresse des sources dudit message et un certain nombre de destinations intermédiaires, permettant audit message d'être acheminé à son ou ses destinataires.

Selon les normes, les stations ne sont en effet pas forcément toutes aptes au relayage. C'est notamment le cas dans la norme HIPERLAN, où seules les stations de type "forwarder" sont agencés pour cela.

Du fait des déplacements fréquents des stations mobiles du réseau, il peut être parfois difficile pour l'une d'entre elles de communiquer avec une autre station mobile éloignée et/ou inaccessible en raison d'un obstacle.

Le réseau filaire à accès aléatoire ETHERNET (Marque déposée), qui est régi par la norme dite IEEE 802.3, peut être utilisé dans l'application décrite ci-dessus. Il fait appel à un protocole de gestion du type à accès multiples sensibles à la porteuse avec détection de collision, plus connu sous l'acronyme CSMA/CD pour CARRIER SENSE MULTIPLE ACCESS WITH COLLISION DETECTION. Mais d'autres formats de réseaux filaires peuvent être envisagés, comme par exemple le standard ISO pour la normes IEEE 802.5.

La présente invention a notamment pour objet d'utiliser des segments d'au moins un réseau auxiliaire d'un protocole de communication donné (réseau de transit) pour véhiculer localement et temporairement des trames émises par un ou plusieurs autre réseaux principaux, notamment radio, de protocoles différents. Le réseau de "transit" pourra être de type câblé (ou filaire), comme par exemple de type ETHERNET, ou "FDDI", ou "anneau à jetons", ou bien également de type radio. Quant au réseau principal radio il pourra être, notamment, au format de la norme "HIPERLAN" ou au format de la norme IEEE 802.11.

Le but est donc de faciliter la transmission de messages entre postes mobiles d'un réseau radio. En d'autres termes, un ou plusieurs réseaux (ou segments de réseau) radio et/ou câblés peuvent être localement et momentanément utilisés en tant que passerelles ou raccourcis pour permettre à un poste mobile d'un réseau radio de communiquer avec un autre poste mobile du même réseau radio lorsque la communication entre ces postes est difficile ou impossible ou que le nombre de relais mobiles nécessaires à la transmission d'un message est trop grand.

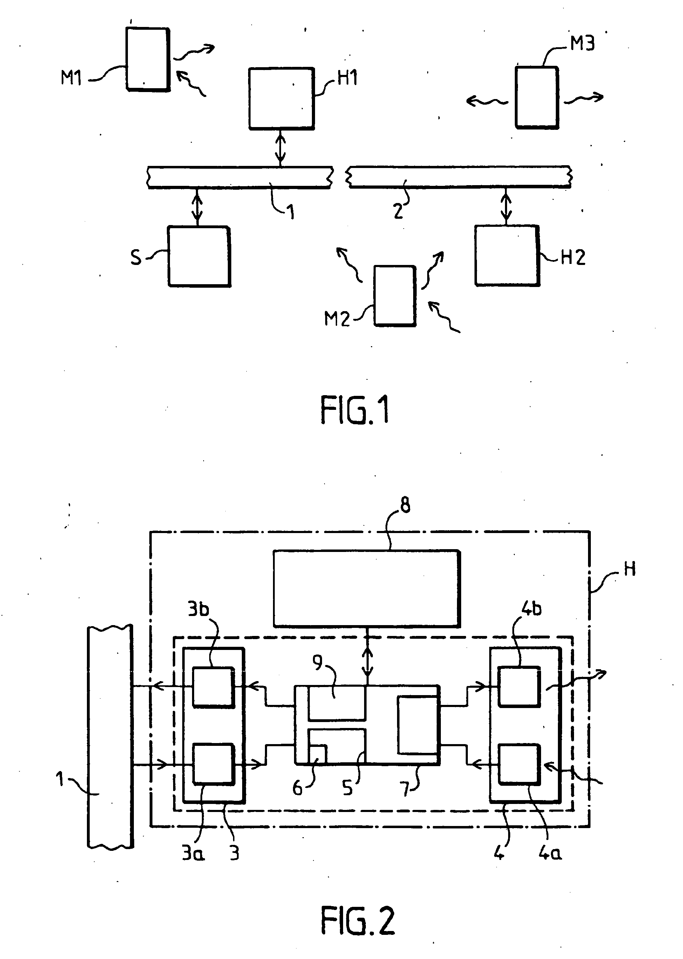

Pour ce faire, la présente demande propose des stations (ou postes) dites hybrides (Hi) (i = 1 et 2 sur la figure 1) raccordées à des segments 1, 2 d'un réseau câblé, comme illustré sur la figure 1. Le mot hybride signifie que la station peut dialoguer avec des réseaux de protocoles (ou formats) différents.

Un tel réseau câblé comprend initialement une multitude de postes ou stations S qui se transmettent des messages via les segments de câbles 1 et 2 selon un protocole connu de format câble.

Les stations hybrides H selon l'invention sont par conséquent soit des stations S ou postes classiques dans lesquels un dispositif d'interconnexion selon l'invention a été installé, soit des postes ou stations particuliers conçus spécifiquement.

De telles stations hybrides H ne sont pas nécessairement fixes. Il peut s'agir de stations mobiles pouvant être raccordées à un segment du réseau câblé. Ces stations hybrides appartiennent au réseau radio, et forment avec les segments de réseau câblé un "réseau radio étendu sur le câble".

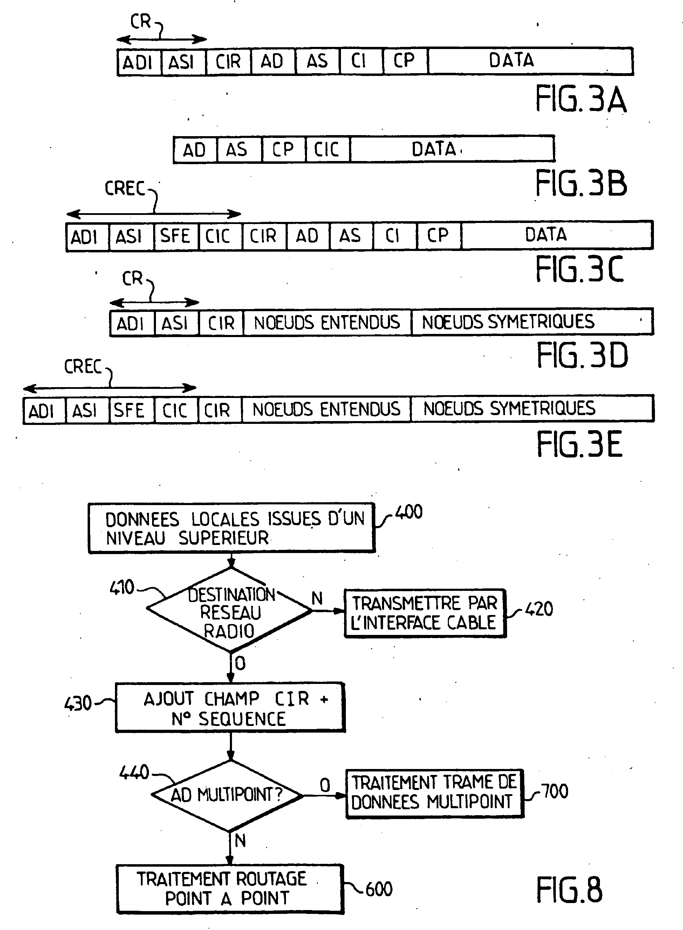

Le réseau radio (ou réseau sans fil) comprend, comme indiqué précédemment, une multitude de postes ou stations mobiles Mj (j = 1 à 3 sur la figure 1), propres à échanger les unes avec les autres, selon un protocole radio fondé sur un format radio, des trames de données ou de messages de services du type de celles illustrées sur les figures 3A et 3D.

La trame (ou message) illustrée sur la figure 3A comprend tout d'abord des données référencées DATA, ainsi qu'un certain nombre de codes et/ou champs dont les définitions sont données ci-après, et qui sont regroupés dans une "en-tête".

ADI désigne l'adresse du destinataire intermédiaire des données (DATA). ASI désigne l'adresse de la dernière source intermédiaire qui a relayé la trame. CIR est un champ d'informations du réseau radio contenant le type d'informations contenues dans la trame reçue et le numéro de cette trame (ou numéro de séquence); ce champ permettant de déterminer si la trame a déjà été reçue et traitée par la station réceptrice. AD désigne l'adresse du ou des destinataires finaux de la trame. AS désigne la source d'origine (il s'agit en fait du poste mobile M qui a généré la trame). CI est un champ d'informations résiduelles. CP est un code de protocole supérieur permettant de désigner la couche (ou niveau) à laquelle sont destinées les données ou le message de service contenu dans la trame.

Il est rappelé, ici, bien que cela soit parfaitement connu de l'homme de l'art, que les postes ou stations d'un réseau sont munis d'interfaces-réseaux définies "en couche ou niveau" (norme ISO), à chacune desquelles est affectée une fonction prédéterminée. Un tel découpage en couches fonctionnelles ou niveaux permet d'assurer la compatibilité entre des organes du réseau de sources différentes lorsqu'ils se trouvent interconnectés. On distinguera, dans ce qui suit, les couches du protocole proprement dites, et les couches supérieures du protocole. On entend par couches supérieures du protocole des opérations spécifiques qui tiennent comptent spécifiquement de la nature et des conditions applicables à la transmission de données entre postes, via le réseau, qu'il soit câblé ou radio. En revanche, les couches du protocole vont au contraire régir la transmission de données au niveau de ses conditions de base, de sorte que la sécurité de cette transmission puisse être assurée.

Une trame telle que celle illustrée sur la figure 3A est habituellement dite encapsulée du fait de la présence de deux codes d'adresses (ADI et ASI) qui forment ce que l'on appelle une "capsule radio CR" (capsule principale).

Une trame de service (ou message de service), du type de celle illustrée sur la figure 3D, comprend généralement moins de codes et/ou champs qu'une trame de données, dans la mesure
où elle ne contient que des informations de service relatives aux relations entre des postes mobiles du réseau. Dans l'exemple illustré, la trame de service est destinée à permettre un contrôle de voisinage des noeuds du réseau radio. Une telle trame comprend, comme toutes les trames circulant dans le réseau radio, la capsule radio CR composée des codes d'adresses ADI et ASI, ainsi qu'un champ d'informations sur le réseau radio CIR. On reviendra plus en détail sur ce type de trame de service.

De même, dans un réseau câblé (ou filaire) classique (réseau auxiliaire), les postes S échangent des messages comprenant des données encapsulées selon un protocole câblé fondé sur un format câblé. Les messages sont donc encapsulés sous forme d'une trame comportant, comme cela est illustré sur la figure 3B, des données (référencées DATA) le champ AD, le champ AS, le champ CP, ainsi qu'un champ spécifique au câble CIC qui forme la capsule filaire (ou capsule auxiliaire), lequel est un champ d'information représentant par exemple le type d'informations contenues dans la trame et le numéro de la trame (numéro de séquence).

Ce champ d'information CIC qui forme la capsule filaire auxiliaire est l'équivalent du champ CIR d'une trame de données radio.

Certains réseaux câblés actuels peuvent, lorsque certains de leurs postes fixes sont équipés à cet effet (par exemple d'une antenne), réceptionner une trame radio, munie de sa capsule radio CR, et la transmettre en un autre poste fixe de ce même réseau câblé. Cependant, dans ces réseaux actuels, il n'est pas possible de se servir des informations de routage contenues dans une trame radio de façon à optimiser la transmission du message qu'elle contient. En d'autres termes, il n'est pas possible de réceptionner une trame radio en un premier poste S, d'utiliser un ou plusieurs segment(s) du réseau câblé pour atteindre un autre poste fixe S, puis de réémettre la trame radio par l'intermédiaire de ce poste fixe en direction du poste mobile M destinataire du message contenu dans la trame radio.

Le dispositif d'interconnexion selon l'invention a donc pour but d'autoriser une telle transmission optimisée via un réseau câblé, ou bien via un autre réseau radio ne possédant pas le même protocole radio que celui du message émis.

Un tel dispositif d'interconnexion qui est par exemple implanté dans une station (ou poste) hybride Hi, raccordée au réseau câblé, doit donc être capable de réceptionner les trames radio du réseau qu'elle interface afin de vérifier si ces trames le concerne, puis d'en extraire des informations de routage permettant une mise à jour des informations de routage qui sont mémorisées dans l'une de ses mémoires, et/ou déterminer un ou plusieurs postes relais hybrides du réseau câblé permettant d'acheminer le plus rapidement possible la trame reçue à proximité immédiate du ou des postes mobiles Mj destinataires du message émis par le poste mobile initial (générateur du message ou trame).

Pour ce faire, le dispositif d'interconnexion selon l'invention comprend (voir figure 2) une interface-réseau câblé 3 directement connectée à un segment du réseau câblé 1, une interface-réseau radio 4 munie d'une antenne émettrice/réceptrice destinée à émettre et réceptionner des trames (ou messages) selon le protocole radio approprié, un module de mémorisation 5 dans lequel se trouve stocké au moins une table de routage 6 sous forme de données numériques, et un module de traitement 7 destiné à gérer les échanges de données ou de messages de services au niveau des interfaces-réseaux, en fonction de la table de routage 6, au moins.

Dans l'exemple illustré, le module de traitement 7 comprend le module de mémorisation 5.

Chaque interface-réseau 3 et 4 comprend, de préférence, un module de réception 3a, respectivement 4a, destiné à collecter les trames en provenance du réseau auquel il est "connecté", et un module de réception 3b, respectivement 4b, destiné à transmettre une trame au format du réseau auquel il est "connecté".

On entend ici par interface-réseau câblé une interface utilisée classiquement dans un réseau câblé. En revanche, on appellera ici interface-réseau radio tout ce qui se trouve entre le module de traitement 7 du dispositif d'interconnexion, et la ou les antennes d'émission réception.

Par ailleurs, on entend ici par "trame" (ou "paquet") une unité élémentaire de transmission de données, ou en d'autres termes, un bloc comprenant un certain nombre de données pouvant être transmises ensemble. Un "message" désigne généralement un ensemble de données à transmettre, de taille quelconque. En d'autres termes, les données d'un message peuvent être réparties en plusieurs trames qui se suivent.

A titre d'exemple, l'interface-réseau câblée peut être formée d'un raccord normalisé par la norme IEEE 802, tel que celui réalisé à l'aide du circuit intégré 86960A vendu par la Société FUJITSU.

Les données (ou le message) contenues dans une trame sont soit destinées à un ou plusieurs autres postes mobiles du réseau radio auquel appartient l'émetteur de la trame, soit plus simplement, à un ou plusieurs postes hybrides Hi, lesquels constituent une extension du réseau radio, soit encore à la fois à des postes mobiles Mj et à des postes hybrides Hi.

Le module de traitement 7 du dispositif d'interconnexion selon l'invention, qui est implanté dans un poste hybride H, est connecté à un niveau dit "supérieur" dudit poste hybride. Ce niveau supérieur qui pourrait être un "niveau 3" (ou supérieur) au sens du modèle OSI est réalisé sous la forme d'un module 8 capable d'analyser les données contenues dans le message, ou bien de générer un message en direction du module de traitement 7 de sorte que ce message, et par conséquent les données qu'il comprend, puisse être transmis via le réseau câblé 1 et/ou via le réseau radio.

Ici, les interfaces-réseaux 3 et 4 constituent le niveau (ou couche) 1, tandis que le module de traitement 7 constitue le niveau (ou couche) 2. Il s'établit ainsi une espèce de hiérarchie entre niveaux, chaque niveau présentant une fonctionnalité particulière qui croit au fur et à mesure que l'on monte vers un niveau d'ordre élevé, et que par conséquent l'on s'aproche des données brutes (DATA) à analyser.

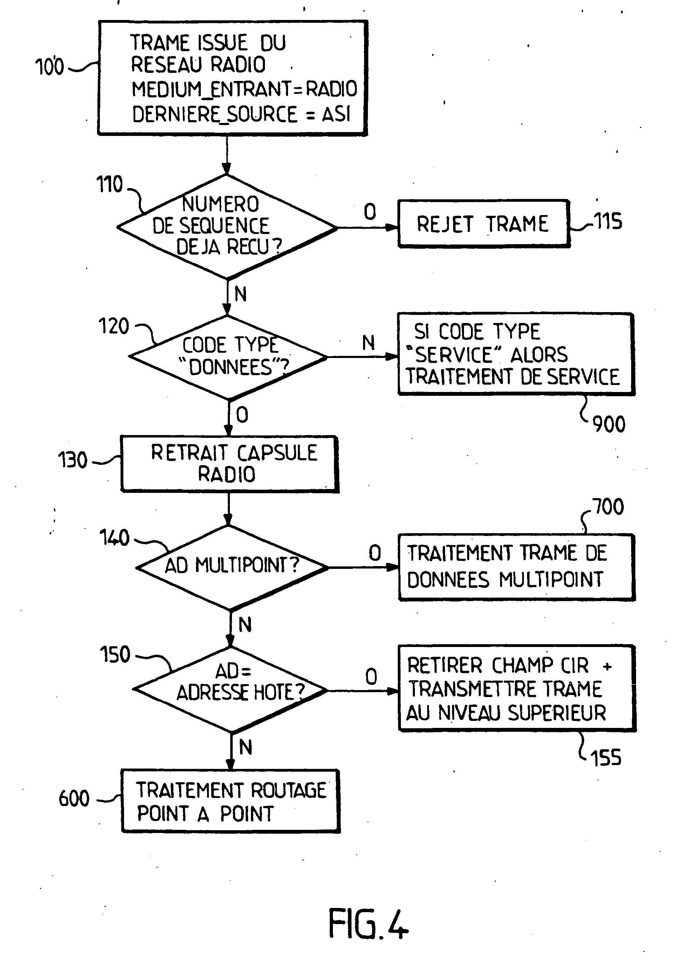

On se réfère maintenant aux figures 4 à 11 pour décrire les mécanismes de traitement de trame mis en oeuvre par un dispositif d'interconnexion du type de celui illustré sur la figure 2 et implanté, seulement à titre d'exemple, à l'intérieur d'une station hybride H raccordé à un réseau câblé.

Le dispositif d'interconnexion selon l'invention a pour but de permettre la libre circulation, sans gêne ni modification, des trames au format du câble dans le réseau câblé, ainsi que la circulation entre stations hybrides connectées au segment 1 et 2 du réseau câblé de trames modifiées (réencapsulées) en provenance du réseau radio.

Pour parvenir à un tel résultat, le dispositif d'interconnexion est agencé pour mettre une trame reçue (ici, soit du réseau câblé, soit du réseau radio) au format du réseau qui va acheminer la trame reçue au niveau de la station relais hybride ou mobile suivante, et ainsi de suite jusqu'à ce que la trame parvienne à son destinataire (une station mobile M).

Le module de traitement 7 du dispositif d'interconnexion selon l'invention comprend à cet effet un module de gestion 9 qui, à réception d'une trame, effectue sur celle-ci, si les informations la concernent, une désencapsulation pour en extraire les données ou le message de service et/ou des informations de routage qui lui permettront de déterminer le ou les prochaines stations relais hybrides et/ou mobiles et par conséquent le ou les réseaux de réémission de la trame.

Lorsque le module de gestion 9 détermine dans les codes et champs contenus dans l'en-tête de la trame reçue que le message est destiné, notamment, au poste hybride (hôte) dans lequel il est implanté, il transmet les données contenues dans cette trame désencapsulée à la couche supérieure (ou de niveau 3, en général) 8 du poste hybride H en vue de leur utilisation ou traitement. Lorsque le module de gestion 9 d'un poste hybride H détermine que son poste hôte n'est pas l'unique destinataire du message, ou bien que le message reçu doit être relayé dans le cadre d'une diffusion (traitement multipoints) ou dans le cadre d'un traitement de type "point à point" sur lequel on reviendra plus loin, il réencapsule le message au format du ou des réseaux de réémission qu'il a choisi(s) sur la base d'une interrogation de la table de routage et d'une analyse des codes et champs d'adresses contenus dans l'en-tête de la trame reçue, puis adresse la trame réencapsulée à la ou les interfaces 3 et/ou 4 concernées par la réémission.

De préférence, la réencapsulation d'un message reçu comporte l'adjonction à la trame reçue d'un code de protocole SFE qui désigne le réseau radio (principal) auquel appartient le poste mobile qui a émis la trame.

Une telle trame de données réencapsulée est illustrée sur la figure 3C. Cette trame comprend l'intégralité des codes et champs d'une trame de données standard du réseau radio (ADI, ASI, CIR, AD, AS, CI, CP), ainsi que le code de protocole SFE qui indique que le message provient du réseau radio, et un champ d'informations spécifiques au réseau câblé CIC qui forme la capsule filaire (auxiliaire) de la trame, de sorte que ledit réseau câblé puisse acheminer la trame réencapsulée au niveau d'un autre poste hybride.

On a représenté sur la figure 3C une trame de données réceptionnée par une station hybride H, puis réencapsulée de façon à emprunter un segment de réseau câblé. Dans cette trame de données réencapsulée, les codes ADI, ASI, SFE et CIC forment ce que l'on appelle dans la suite la capsule mixte ou encore la capsule radio étendue au câble CREC. En d'autres termes, la capsule mixte est constituée de la "juxtaposition" d'une capsule radio (principale) et d'une capsule filaire (auxiliaire).

Sur la figure 3E, se trouve également illustrée une trame (ou message) de service réencapsulée de manière à pouvoir transiter via le réseau câblé, de façon à rejoindre une ou plusieurs stations hybrides Hi.

Sur la figure 4 se trouve représenté un diagramme bloc de principe illustrant les principales étapes de traitement d'une trame reçue d'un poste mobile M du réseau radio, et destinée, soit à un ou plusieurs autres postes mobiles du réseau radio, soit à une ou plusieurs stations hybrides H connectées à des segments de réseau câblé raccordés entre eux, soit encore à des stations mobiles et/ou hybrides.

La trame issue du réseau radio est réceptionnée par le module de réception 4a de l'interface-réseau radio 4 qui la transmet alors au module de traitement 7, et plus précisément à son module de gestion 9, après vérification de son format. Dans une première étape 100, le module de gestion place une variable "medium_entrant" à la valeur "radio" de façon à noter d'où provient la trame reçue, et place une variable "adresse dernière source" à la valeur du champ d'adresse de la source intermédiaire ASI, laquelle est l'adresse de la dernière station ayant émis le message. Puis, de préférence, dans une étape 110 le module de traitement 9 analyse le contenu du champ d'information radio CIR de façon à vérifier si le numéro de trame (ou de séquence) qu'il contient correspond à une trame,déjà reçue.

Avantageusement, et bien que cela ne soit pas obligatoire, si la trame a déjà été traitée, et par conséquent si le test est positif, la trame est alors rejetée. Cela constitue l'étape 115 qui met fin au traitement de la trame. En revanche, si le résultat du test est négatif, le module de traitement 9 procède dans une étape 120 à un second test portant sur les contenus des champs d'adresses AD, AS et d'informations résiduelles CI, ainsi que du code de protocole supérieur CP qui désigne la couche concernée par les données de la trame, en vue de déterminer si la trame reçue contient des données
ou bien un message de services.

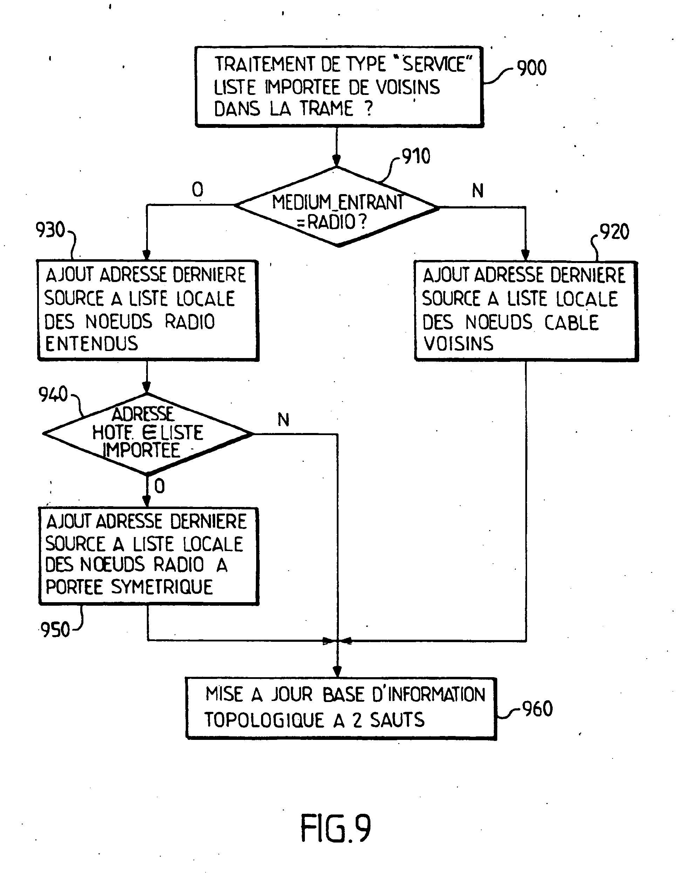

Si la trame contient un message de service, le résultat du test est donc négatif et le module de gestion passe à une étape 900 de traitement du message de service, sur laquelle on reviendra plus loin en référence à la figure 9. En revanche, si la trame contient des données, c'est-à-dire si le test est positif, le module de gestion 9 procède dans une quatrième étape 130 au retrait de la capsule (principale) radio CR, ou en d'autres termes au retrait des champs d'adresses du destinataire intermédiaire ADI et de la source intermédiaire ASI, ce dernier comprenant en fait l'adresse de la dernière station ayant émis le message.

Dans une étape 140, le module de gestion 9 procède à un troisième test portant sur le contenu du champ d'adresse du destinataire final de la trame AD. En fait, ce test consiste à déterminer si la trame reçue doit être diffusée (données multipoints) car elle concerne plusieurs postes ou stations mobiles et/ou hybrides, ou bien si elle ne concerne qu'un unique poste et qu'elle contient par conséquent des données dites point à point.

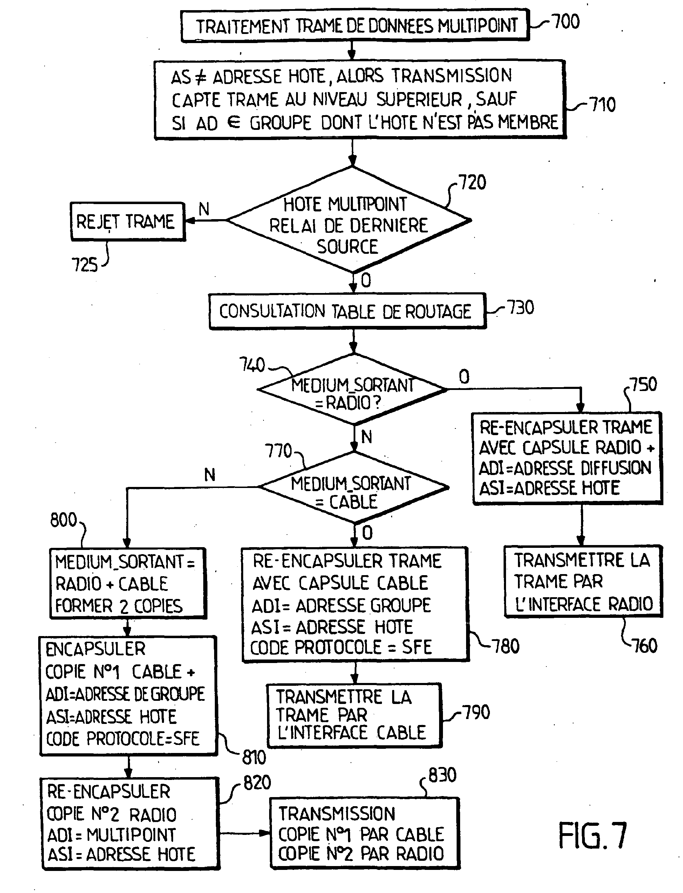

Si le résultat du test de l'étape 140 est positif, le module de gestion 9 procède dans une étape 700, qui sera décrite ci-après en référence à la figure 7, au traitement de la trame de données multipoints de façon à permettre sa diffusion. En revanche, si le résultat de ce troisième test est négatif, le module de gestion procède dans une étape 150 à un quatrième test portant directement sur le contenu du champ AD de façon à déterminer si la station hybride H dans laquelle il est implanté (station hôte) est le destinataire de la trame, ou bien si cette station hôte n'est qu'une station relais permettant un routage point à point en direction d'une autre station hybride ou bien d'une station mobile M du réseau radio.

Si le résultat de ce quatrième test est positif, et que par conséquent la station hybride H est le destinataire des données contenues dans la trame reçue à l'étape 100, le module de gestion 9 procède dans une étape 155 au retrait du champ d'informations radio CIR, puis à la transmission de la trame au niveau supérieur 8, par exemple, de la station hybride dans laquelle il est implanté, de la trame en vue du traitement des informations restantes qu'elle contient. On transmet à la couche correspondant au code protocole du paquet.

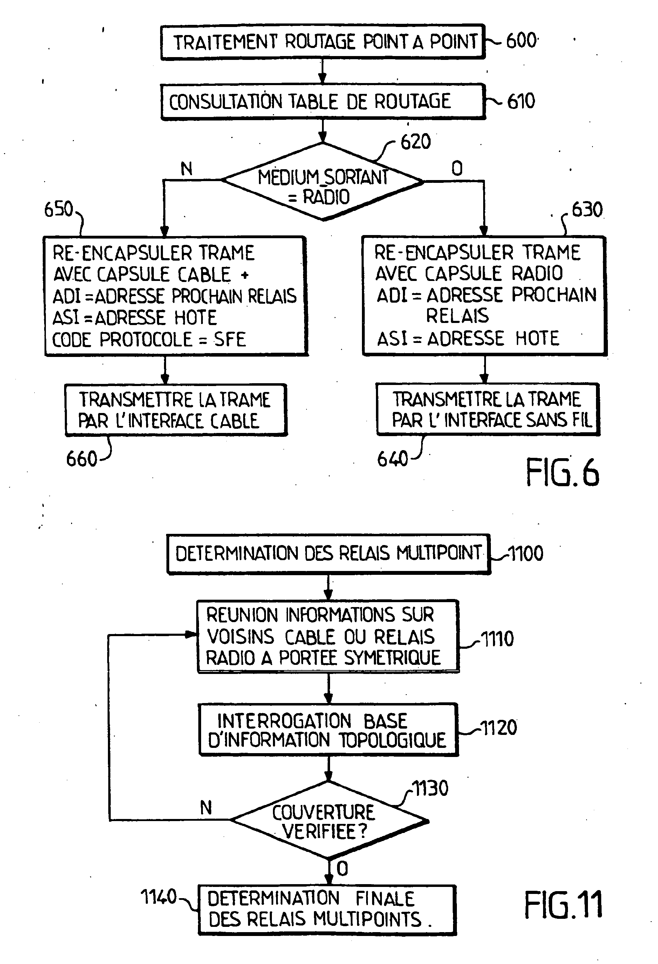

En revanche, si le résultat de ce quatrième test est négatif, le module de gestion 9 procède, dans une étape 600 qui sera décrite plus loin en référence à la figure 6, au traitement de routage point à point de la trame, pour relayer celle-ci et par conséquent la rapprocher de façon optimisée du poste mobile ou hybride destinataire.

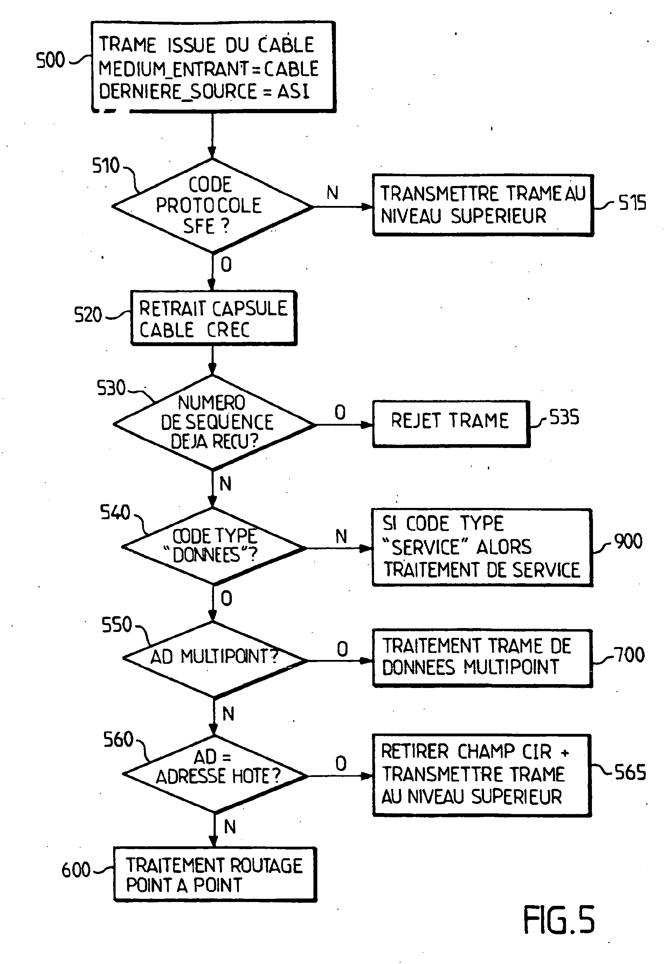

On se réfère maintenant à la figure 5 pour décrire le traitement d'une trame reçue du réseau câblé. Dans ce sens, la trame est réceptionnée par le module de réception 3A de l'interface-réseau câblé d'une station hybride H. Cette interface 3 transmet la trame au module de traitement 7, et plus précisément à son module de gestion 9.

Dans une étape 500 la trame est donc réceptionnée par le module de gestion 9, lequel met la variable medium_entrant à la valeur "câble" indiquant que le message reçu provient du réseau câblé, et met la variable "adresse dernière source" à la valeur du champ d'adresse de la source intermédiaire ASI.

Puis dans une étape 510 le module de gestion 9 effectue un premier test destiné à déterminer si le code de protocole SFE indiquant que la trame reçue a été émise initialement par le réseau radio (réseau principal), est présent. Si le résultat de ce test est négatif alors, dans une étape 515 le module de gestion transmet la trame au niveau supérieur 8 de la station hybride, en vue du traitement des données qu'elle contient. Lorsque le résultat du test de l'étape 510 est positif, c'est-à-dire lorsque la trame contient le code de protocole SFE, alors dans une étape 520 le module de gestion procède au retrait de la capsule radio encapsulée au format câble CREC (capsule mixte).

Puis, dans une étape 530 le module de gestion 9 effectue un second test portant sur le contenu du champ d'informations radio CIR, et notamment sur le numéro de la trame (ou numéro de séquence), de façon à déterminer si celle-ci a déjà été reçue et donc traitée. Si le résultat de ce second test est positif, c'est-à-dire si la trame a déjà été traitée, alors le module de gestion procède avantageusement dans une étape 535, bien que cela ne soit pas obligatoire, au rejet de la trame reçue. En revanche, si le résultat de ce second test est négatif, le module de gestion 9 poursuit, dans un troisième test, l'analyse des informations spécifiques contenues dans le champ CIR, de façon à déterminer si les informations que contient la trame reçue sont des données ou bien forment un message de service. Lorsque le résultat de ce troisième test est négatif, c'est-à-dire si la trame contient un message de service, alors le module de gestion 9 passe à l'étape 900. En revanche, si le résultat de ce troisième test est positif, alors dans une étape 550, le module de gestion 9 procède à l'analyse du champ d'adresse AD (adresse du destinataire final) de façon à déterminer si la trame doit être diffusée (traitement multipoints) ou bien s'il s'agit d'une trame à relayer en un unique poste (traitement point à point).

Lorsque le résultat de ce quatrième test est positif, c'est-à-dire lorsqu'il s'agit d'une trame à diffuser, le module de gestion 9 procède dans l'étape 700 au traitement multipoints. En revanche, lorsque le résultat de ce quatrième test est négatif, le module de traitement 9 procède dans une étape 560 à un cinquième test portant également sur le champ d'adresse AD, de façon à déterminer si l'adresse du destinataire de la trame est celle du poste hybride dans lequel il est implanté.

Dans l'hypothèse exceptionnelle où la table de routage ne contient pas les informations nécessaires au relayage, on pourrait dans certaines variantes procéder, soit au rejet de la trame non relayable, soit relayer cette trame vers un autre poste relais choisi de façon arbitraire, soit encore effectuer un relayage par diffusion dans lequel le message serait traité de la même façon qu'un message à diffusion, par exemple en forçant celui-ci à passer par l'étape 700.

Si le résultat de ce cinquième test est positif, alors le module de gestion 9 procède dans une étape 565 au retrait du champ d'informations radio CIR, puis transmet le reste des informations contenues dans la trame au niveau supérieur 8, en vue du traitement des données qu'elle contient. En revanche, si le résultat de ce cinquième test est négatif, le module de traitement passe à l'étape 600 en vue d'un traitement des données de type point à point.

Le code de protocole SFE permet à un dispositif d'interconnexion selon l'invention de reconnaître qu'une trame qui circule dans le réseau câblé est issu du réseau radio et non pas qu'il s'agit d'une trame classique du réseau câblé.

On se réfère maintenant à la figure 6 pour décrire les principales étapes de traitement du routage dit "point à point" (étape 600 dans ce qui précède).

Comme indiqué précédemment, le module de traitement 7 du dispositif d'interconnexion selon l'invention comprend une table de routage 6 mémorisée dans un module de mémorisation 5. Une telle table de routage peut être constituée d'informations prédéterminées mémorisées lors de la fabrication du dispositif d'interconnexion. Cependant, il est préférable qu'une telle table de routage puisse être mise à jour en permanence. Une telle mise à jour peut être effectuée à partir des informations contenues dans l'en-tête des trames reçues, étant donné que chacune d'entre elles comporte l'indication de son émetteur immédiat, ce qui lui permet d'entretenir en permanence une table des postes ou stations voisines hybrides et mobiles. De plus, les stations mobiles M du réseau radio émettent généralement des trames spontanées qui diffusent aux autres stations mobiles à sa portée radio une partie au moins du contenu de leur table de routage personnelle (les stations qu'elles reçoivent).

Ainsi, chaque station mobile peut connaître de façon autonome les stations hybrides et mobiles qu'elle reçoit, et, par les informations transmises, les stations hybrides et mobiles qui la reçoivent. Deux registres peuvent être ainsi construits au niveau de chaque station mobile, un registre d'émission qui comprend les stations que la station entend et un registre de réception qui comprend les stations qui sont entendues par cette station.

Il est clair, qu'une station hybride constitue une station du réseau radio. Par conséquent, il est important que sa table de routage soit complète et mise à jour, de la même façon que celle des stations mobiles aptes au relayage de sorte que la détermination des relais soit optimisée lors de la transmission d'un message encapsulé pour la câble.

Connaissant les stations que l'on entend et celles dont on est entendu, il est possible de déterminer les stations qui sont à portée symétrique. Or, il est particulièrement avantageux que le routage, qu'il soit de type diffusion ou de type point à point, s'effectue à l'aide de stations relais qui vérifient cette condition de portée symétrique. Un poste donné peut ainsi communiquer directement (par une unique transmission) avec ses homologues à portée symétrique, ou indirectement (par d'autres transmissions) avec d'autres postes ou stations à portée symétrique des premiers postes qui serviront alors de relais, et ainsi de suite. Il est alors possible de calculer le nombre de sauts nécessaires à une station pour atteindre une autre station. Ce nombre de sauts est de préférence limité.

Connaissant le nombre de sauts nécessaires à une station pour communiquer avec d'autres stations hybrides et/ou mobiles, il est possible de construire une nouvelle table que l'on appelle "directoire topologique", au niveau, de préférence, de chaque station ou poste hybride et mobile. Un tel directoire se présente sous la forme d'une matrice rectangulaire
ou d'une matrice à deux entrées, avec par exemple en colonne les numéros de certaines stations (par exemple seulement celles dites de type "forwarder" de la norme HIPERLAN) contenues dans le registre d'émission (celles qui reçoivent directement la station concernée), et en ordonnée les numéros de toutes les stations qui sont accessibles à partir du poste concerné, et non pas seulement celles à portée symétrique directe. Cette technique de routage est dite "des vecteurs de distance". Chaque cellule de ce directoire (ou matrice) contient alors le nombre de sauts nécessaires pour atteindre la station visée, c'est-à-dire le destinataire du message contenu dans la trame. En alternative, le directoire topologique peut contenir des informations sur l'état des liens directs entre chacune des paires de stations (ou postes) du réseau. Cette technique est dite "de l'état des liens".

La mise à jour de la table de routage de chacune des stations hybrides et mobiles est donc particulièrement intéressante, dans la mesure où elle peut permettre la mise à jour des directoires topologiques dans les stations hybrides et dans certaines stations mobiles à portée radio.

Une telle mise à jour peut être effectuée en examinant les codes contenus dans la trame reçue, et notamment l'adresse de la source intermédiaire (ASI), l'adresse de la source d'origine (AS), et le nombre de sauts déjà effectués par la trame si celui-ci est mentionné dans un champ CIR.

De manière alternative, mais sans pour autant exclure ce qui vient d'être dit, la mise à jour des directoires topologiques peut être effectuée par des messages de service spécialement dédiés, de type "contrôle de topologie", envoyés préférentiellement par mode de diffusion par certaines stations hybrides ou mobiles. Ces messages peuvent contenir, pour une station donnée, une liste de stations aptes à relayer leurs messages et choisies de préférence parmi les stations qui son à sa portée de façon symétrique. Ces messages de service seront particulièrement utiles pour les routages de type dit "état des liens".

Une autre possibilité, qui n'exclut pas la précédente, consiste à faire en sorte que ces messages de service contiennent des informations sur le nombre de sauts vers d'autres stations du réseau. Ces messages de service seront particulièrement utiles pour les routages de type dit "vecteur de distance".

Dans le contexte de la norme IEEE 802.11, où une station hybride est identifiée avec un point d'accès ("Access Point" selon la terminologie de cette norme), l'échange de messages de service permet aux points d'accès d'acquérir des informations topologiques sur l'ensemble des stations mobiles et des stations hybrides, de façon à permettre la gestion efficace du système de distribution. Dans le cas où le système de distribution serait lui aussi de type sans fil (non filaire), l'invention permet donc de gérer ce système de distribution à partir des points d'accès en réutilisant, au moins partiellement, des fonctions radio propres au jeu de service de base BSS ("Basic Service Set" selon la terminologie anglaise de la norme IEEE 802.11).

Lorsque le module de gestion 9 a déterminé, soit lors d'une étape 560, soit lors d'une étape 150, qu'un traitement de type point à point doit être appliqué à la trame reçue, il déclenche le traitement point à point de l'étape 600. Puis, lors d'une étape 610, il consulte au moins sa table de routage pour déterminer l'adresse du prochain relais, le plus approprié à l'acheminement optimisé de la trame au niveau du poste destinataire. Cette optimisation peut être faite sur un ou plusieurs critères portant sur les caractéristiques des réseaux principal et auxiliaire(s), autres que celui portant sur le nombre de sauts, comme par exemple la qualité des liens, ou la capacité des liens, ou encore la disponibilité des liens. A titre d'exemple, on pourrait favoriser, à nombre de sauts égal, un transit sur le réseau filaire plutôt que sur le réseau radio (principal), en raison de la plus grande capacité des réseaux filaires, généralement. Il est clair que cette détermination du prochain relais (station hybride ou station mobile) fournit également le type de réseau (radio ou câblé) dans lequel la trame va être réémise puisque ces informations sont stockées de préférence sous forme de couple dans la mémoire 5.

Une fois cette détermination effectuée, le module de gestion 9 effectue dans une étape 620 un premier test portant sur le type du réseau de réémission. En d'autres termes, ce test consiste à déterminer si le réseau de réémission est ou non le réseau radio (dans cet exemple). Lorsque le résultat du test est positif, c'est-à-dire si le réseau de réémission est le réseau radio, alors le module de gestion 9 procède dans une étape 630 à la réencapsulation de la trame en adjoignant à celle-ci la capsule radio CR (codes d'adresses ADI et ASI), le code ADI comprenant l'adresse du prochain relais déterminé à l'étape 610, et le code ASI contenant l'adresse de la station hybride H dans laquelle il est implanté. Il n'est pas nécessaire d'adjoindre le code de protocole SFE puisque l'on réémet dans le réseau radio. Puis, dans une étape 640, le module de traitement 7 adresse la trame réencapsulée lors de l'étape 630 au module d'émission 4b de l'interface-réseau radio 4, de sorte que cette trame réencapsulée soit réémise dans le réseau radio en direction du prochain relais (ici une station mobile M).

Lorsque le résultat du test effectué à l'étape 620 est négatif, c'est-à-dire lorsque le réseau de réémission est le réseau câblé, le module de gestion procède dans une étape 650 à la réencapsulation de la trame en lui adjoignant une capsule radio encapsulée au format câble CREC (codes et champs ADI, ASI, SFE, CIC) (capsule mixte), le code ADI comprenant l'adresse du prochain relais hybride sur le réseau câblé, le code ASI indiquant l'adresse de la station hybride hôte sur le même réseau, et le code de protocole SFE indiquant que la trame provient initialement du réseau radio. Puis, dans une étape 660, le module de traitement 7 transmet la trame réencapsulée au module d'émission 3B de l'interface-réseau câblé 3 en vue de son émission dans un segment 1 ou 2 du réseau câblé en direction de la station hybride choisie comme prochain relais lors de l'étape 610.

On se réfère maintenant à la figure 7 pour décrire le traitement d'une trame par diffusion (ou traitement de données multipoints).

Un tel traitement est décidé par le module de gestion 9 d'une station hybride H à la suite soit du test effectué à l'étape 140, soit du test effectué à l'étape 550. En fait, il consiste à déterminer la meilleure façon de faire parvenir une trame au niveau de plusieurs stations hybrides et/ou mobiles.

Pour ce faire, le module de gestion effectue dans une étape 710 une analyse des champs d'adresses AS et AD contenus dans l'en-tête de la trame reçue. Si l'adresse de la source (AS) n'est pas la même que l'adresse hôte (celle de la station hybride dans laquelle le module de gestion 9 se trouve implanté), alors ledit module de gestion 9 délivre une copie de la trame reçue au niveau supérieur 8 de la station hybride qui correspond au code de protocole CP. Cette opération ne s'effectue que si et seulement si le code AD ne désigne pas un groupe de stations hybrides Hi dont l'hôte n'est pas membre. A cet effet, les stations hybrides connectées au réseau câblé sont regroupées en groupes possédant une même adresse de groupe. Toutes les stations hybrides connectées à un même réseau câblé peuvent par exemple posséder la même adresse de groupe, mais cela n'est pas obligatoire.

Dans tous les autres cas, le module de gestion 9 procède dans une étape 720 à un premier test destiné à déterminer si la station hybride (hôte) dans laquelle il est implanté est de type "multipoint relais de dernière source" (il s'agit alors du relais multipoint de l'émetteur désigné par la variable adresse_dernière source). Il est intéressant de noter ici, et cela sera développé plus loin, que le multipoint relais correspond à une optimisation qui n'est pas indispensable. Par défaut, chaque station apte à relayer peut être considérée comme multipoint relais d'une station donnée. Si le résultat de ce premier test est négatif, alors le module de gestion 9 décide dans une étape 725 de rejeter la trame reçue. En revanche, si le résultat de ce premier test est positif, alors le module de gestion procède dans une étape 730 à la détermination du ou des réseaux de réémission de la trame à diffuser. Cette détermination s'effectue par une consultation d'au moins la table de routage. Le module de gestion 9 procède alors dans une étape 640 à un second test destiné à déterminer si le réseau de réémission déterminé est le réseau radio.

Si la réponse est affirmative, alors le module de gestion 9 procède dans une étape 750 à la réencapsulation de la trame reçue par une adjonction de la capsule radio CR (composée des champs ADI et ASI), le champ ASI comprenant l'adresse de la station hybride hôte, et le champ ADI comprenant, de préférence, une adresse de diffusion du réseau radio, ou de manière alternative, si le format radio le permet plusieurs adresses de stations hybrides H ou mobiles M devant poursuivre la diffusion de la trame réencapsulée. Puis, dans une étape 760 le module de traitement 7 transmet la trame réencapsulée lors de l'étape 750 au module de réémission 4b de l'interface-réseau radio 4 en vue de l'émission de cette trame réencapsulée dans l'éther (support de communication du réseau radio).

En revanche, si le résultat du second test est négatif, c'est-à-dire si la détermination effectuée à l'étape 730 a abouti soit à la détermination d'un unique réseau de retransmission câblé, soit à la fois au réseau de transmission câblé et au réseau de transmission radio, alors le module de gestion 9 procède dans une étape 770 à un troisième test destiné à déterminer si seul le réseau câblé a été choisi comme réseau de retransmission.

Si le résultat de ce troisième test est positif, c'est-à-dire si seul le réseau câblé a été choisi comme réseau de retransmission, alors le module de gestion procède dans une étape 780 à la réencapsulation de la trame par adjonction d'une capsule radio encapsulée au format câble CREC (composé des codes et champs ADI, ASI, SFE, CIC) (capsule mixte), le code ADI comprenant de préférence l'adresse de groupe des stations hybrides connectées au réseau câblé, le code ASI comprenant l'adresse de la station hybride hôte, et le code de protocole SFE indiquant que le message contenu dans la trame réencapsulée est issu du réseau radio et ne concerne donc pas les stations classiques S du réseau câblé. Puis, dans une étape 790, le module de traitement 7 transmet la trame réencapsulée à l'étape 780 au module d'émission 3B de l'interface-réseau câblé 3 en vue de l'émission de cette trame réencapsulée dans un segment du réseau câblé, en direction des stations hybrides désignées par l'adresse de groupe.

En revanche, si le troisième test effectué à l'étape 770 est négatif, c'est-à-dire si le réseau câblé et le réseau radio ont été choisis tous les deux comme réseaux de retransmission (ou de réémission) lors de l'étape 730, alors le module de gestion procède dans une étape 800 à la formation de deux copies de la trame. Puis, dans une étape 810, le module de gestion 9 procède à la réencapsulation de l'une des deux copies de la trame par adjonction de la capsule radio encapsulée au format câble CREC (codes ADI, ASI, SFE et CIC) (capsule mixte), le code ADI désignant, de préférence l'adresse de groupe des stations hybrides du réseau, le code ASI désignant l'adresse de la station hybride hôte, et le code de protocole SFE indiquant que le message contenu dans la trame est issu du réseau radio.

Dans une étape 820 le module de gestion 9 procède alors à la réencapsulation de la seconde copie de la trame par adjonction de la capsule radio CR (codes ADI et ASI), le code ADI signalant que la transmission est de type multipoint (ou à diffusion), et le code ASI comprenant l'adresse de la station hybride hôte.

Enfin, dans une étape 830, le module de traitement 7 procède à la transmission de la première copie réencapsulée au format du câble au module d'émission 3b de l'interface-réseau câblé 3 en vue de l'émission de cette copie N°1 dans le réseau câblé en direction des stations hybrides désignées par l'adresse de groupe, et de la copie No 2 réencapsulée au format radio au module d'émission 4b de l'interface-réseau radio 4 en vue de l'émission de celle-ci dans l'éther formant le support de communication du réseau radio.

Le dispositif d'interconnexion selon l'invention peut également, comme signalé précédemment, traiter des trames comprenant des messages de service, comme par exemple des messages comportant une liste importée de voisins (stations hybrides ou stations mobiles). Pour décrire un tel traitement, on se réfère maintenant à la figure 9.

Ce type de traitement est effectué par le module de gestion 9 suite aux tests effectués soit à l'étape 120, soit à l'étape 540.

Après l'étape 900, le module de gestion 9 procède dans une étape 910 à un premier test destiné à déterminer si le réseau d'où provient la trame reçue est le réseau radio ou non (en d'autres termes on effectue une analyse de la variable médium_entrant dont la valeur a été fixée soit à l'étape 100, soit à l'étape 500).

Lorsque le résultat de ce premier test est négatif, c'est-à-dire si le réseau ayant servi à acheminer la trame au niveau de la station hybride n'est pas le réseau radio, alors le module de gestion 9 procède dans une étape 920 à l'ajout, si nécessaire, de l'adresse de la toute dernière station source (celle qui est contenue dans le champ ASI non encore modifié) à la liste locale des noeuds (ou stations) voisins par le réseau câblé. Puis, on passe directement à une étape 960 dans laquelle le module de traitement 7 effectue une mise à jour du directoire topologique à deux sauts dont il a été question précédemment.

En revanche, si le résultat du premier test effectué à l'étape 910 est positif, c'est-à-dire si le réseau qui a permis l'acheminement de la trame reçue est le réseau radio, alors le module de gestion 9 procède dans une étape 930 à l'ajout, si nécessaire, de l'adresse de la dernière source intermédiaire (champ non encore modifié ASI) à la liste locale des noeuds (ou stations) entendus par voie radio. Puis, le module de gestion 9 procède dans une étape 940 à un second test destiné à déterminer si l'adresse hôte (l'adresse de la station dans laquelle il est implanté) se trouve dans la liste importée contenue dans la trame reçue.

Si le résultat de ce second test est négatif, on passe alors directement à l'étape 960. En, revanche, si le résultat de ce second test est positif, alors le module de gestion procède dans une étape 950 à l'adjonction, si nécessaire, de l'adresse de la dernière source intermédiaire (champ ASI non encore modifié) à la liste locale des noeuds (ou stations) à portée symétrique radio de la station hybride concernée. Puis, le module de gestion 9 passe à l'étape 960.

On va maintenant décrire, en référence à la figure 11, la détermination des relais multipoints nécessaires au premier test effectué à l'étape 720 lors du traitement de type diffusion (ou multipoints).

La détermination des relais multipoints revêt une importance certaihe dans les réseaux radio du type de celui décrit, dans la mesure où elle permet d'assurer une diffusion optimale des messages de service, et par conséquent la mise à jour des différentes tables ainsi que des registres. Pour ce faire, il est particulièrement avantageux que chaque station hybride et mobile possède une table de diffusion dans laquelle se trouvent stockés les numéros (ou adresses) des stations (ou postes) hybrides et mobiles, de préférence à portée symétrique, ou bien un sous-ensemble de ces stations vérifiant la propriété suivante : il existe en permanence une station hybride ou mobile dans la table de diffusion permettant d'atteindre l'une quelconque des stations hybrides ou mobiles du réseau radio, ou l'une quelconque des stations hybrides ou mobiles visées par la diffusion. Cette sélection optimisée des multipoints relais n'est pas nécessaire. On pourra en effet préférer choisir que toutes les stations aptes à relayer, ou sous-ensemble donné de ces stations, puissent agir comme multipoint relais de la station hôte.

De préférence, chaque station hybride ou mobile possède un répertoire de diffusion dans lequel se trouvent mémorisés les numéros (ou adresses) de diffusion des stations ayant permis la diffusion des messages ayant atteint la station hybride ou mobile concernée.

La détermination des relais multipoints est déclenchée dans une étape 1100 par le module de gestion 9. Puis, dans une étape 1110 le module de gestion 9 détermine, à l'aide de ses différentes tables, un sous-ensemble de stations voisines propres à assurer le relais de la trame de service sur le câble, ou bien de stations mobiles à portée symétrique radio. Ce sous-ensemble forme alors un ensemble de candidats au relais multipoints.

Dans une étape 1120, le module de gestion 9 procède alors à une interrogation du ou des directoires topologiques de manière à déterminer si les noeuds ou stations hybrides et/ou mobiles situés à deux sauts sont voisins de l'une des stations relais multipoints candidates déterminées à l'étape 1110.

Puis, dans une étape 1130, le module de gestion effectue un test destiné à déterminer si les stations relais multipoints sélectionnées dans les étapes 1110 et 1120 permettent d'assurer la diffusion des trames, ou en d'autres termes si la couverture topologique est assurée. Si le résultat de ce test est positif, c'est-à-dire si la couverture est assurée, alors le module de gestion procède, dans une étape 1140, à la sélection finale des stations relais multipoints. En revanche, si le résultat du test est négatif, c'est-à-dire si la couverture n'est pas assurée par les stations sélectionnées aux étapes 1110 et 1120, alors le module de gestion 9 retourne à l'étape 1110 de façon à effectuer une nouvelle détermination de relais voisins du câble ou de relais à portée symétrique radio. Les étapes 1110 à 1130 sont par conséquent effectuées en boucles jusqu'à ce que le résultat du test de l'étape 1130 soit positif.

De préférence, le dispositif d'interconnexion selon l'invention est capable, lorsqu'il est implanté dans une station hybride, de transformer des données locales (ou des messages locaux) en trames exploitables par les stations mobiles et hybrides. Cette mise en forme de trames concerne tout aussi bien les trames comportant des données, que les trames comportant des messages de service.

On se réfère maintenant à la figure 8 pour décrire la mise en forme d'une trame de données locales. Dans ce cas particulier, c'est la station hybride H qui décide d'envoyer des données soit à une unique station hybride ou mobile (traitement point à point), soit à plusieurs stations hybrides et/ou mobiles (traitement multipoint ou par diffusion).

Lorsque tel est le cas, la station hybride H adresse dans une étape 400 des données locales à transmettre ainsi que l'adresse ou les adresses de la ou des stations hybrides ou mobiles à laquelle ou auxquelles elle veut fournir les données locales. Cette transmission s'effectue via le niveau supérieur 8

Puis dans une étape 410, le module de gestion effectue un premier test de manière à déterminer si le réseau qui va permettre la transmission des données est le réseau radio.

Si le résultat de ce premier test est négatif, c'est-à-dire si le réseau de transmission est le réseau câblé, alors le module de gestion 9 effectue dans une étape 420 la mise en forme de la trame au format du réseau câblé, c'est-à-dire en encapsulant les données à l'aide de la capsule radio encapsulée au format câble CREC (ADI,ASI,SFE,CIC) (capsule mixte) et des champs AD, AS, CI, CP et CIR appropriés (voir figure 3B).

En revanche, si le résultat de ce premier test effectué à l'étape 410 est positif, c'est-à-dire si la station destinataire appartient au réseau radio (station mobile M) alors, le module de gestion procède dans une étape 430 à la création d'un champ CIR (champ d'information pour le réseau radio) comprenant le type des données locales et un numéro de séquence (ou numéro de trame). Puis, dans une étape 440, le module de gestion 9 effectue un second test de manière à déterminer si les données locales doivent être traitées par diffusion (multipoint) ou point à point. Si le résultat de ce second test est positif, c'est-à-dire si les données locales doivent être diffusées, alors le module de gestion 9 passe à l'étape 700 qui a été décrite précédemment. En revanche, si le résultat de ce second test effectué à l'étape 440 est négatif, c'est-à-dire si les données locales ne concernent qu'une unique station mobile, alors le module de gestion 9 passe à l'étape 600 de façon à effectuer un traitement point à point.

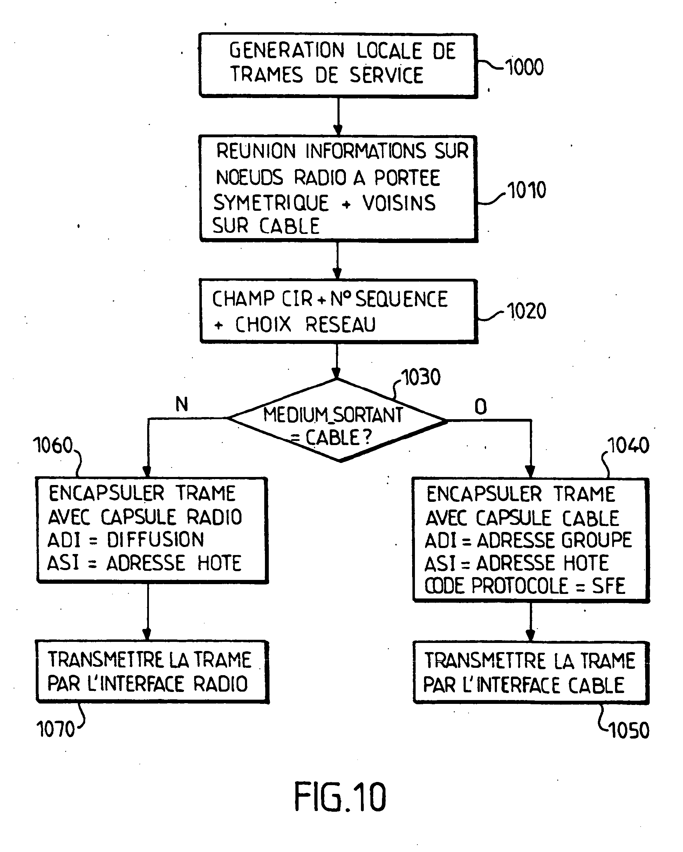

On se réfère maintenant à la figure 10 pour décrire la mise en forme de trames de service générées localement par une station hybride contenant un dispositif d'interconnexion selon l'invention.

La génération locale d'un message de service n'est pas forcément décidée par une station hybride, elle peut être, selon le type de réseau radio choisi, effectuée spontanément à des intervalles de temps sensiblement réguliers, par le module de traitement 7 du dispositif. La mise en forme d'une trame de service débute donc dans une étape 1000 soit par une décision du module de traitement 7, soit par une requête issue du niveau supérieur 8 de la station hybride H.

Puis, dans une étape 1010 le module de gestion 9 détermine un premier sous-ensemble de la liste mémorisée, de préférence récemment mise à jour, des noeuds (ou stations) entendus, un second sous-ensemble de la liste des noeuds ou stations mobiles M à portée symétrique radio, ainsi qu'un troisième sous-ensemble des stations voisines sur le câble.

Le module de gestion 9 procède alors dans une étape 1020 à la création d'un champ CIR (champ d'information du réseau radio) comprenant le type du message de service (par exemple le fait que le message de service est destiné à contrôler le voisinage), ainsi qu'un numéro de séquence (ou de trame). D'autre part, dans cette étape 1020 le module de gestion 9 détermine le réseau dans lequel va être effectuée la première transmission par diffusion du message de service.

Dans une étape 1030, le module de gestion 9 effectue un test de manière à déterminer si le réseau de transmission de la trame de service, déterminé à l'étape 1020, est le réseau câblé.

Lorsque le résultat de ce test est positif, c'est-à-dire si le réseau de transmission est le réseau câblé, alors le module de gestion 9 procède dans une étape 1040 à l'encapsulation de la trame de service avec la capsule radio encapsulée au format câble CREC (comportant les codes et champs ADI, ASI, SFE, CIC) (capsule mixte), le code ADI indiquant de préférence l'adresse de groupe des stations hybrides connectées au réseau câblé et propres à assurer la diffusion, le code ASI indiquant l'adresse de la station hybride dans laquelle le module de gestion 9 se trouve implanté (adresse hôte), et le code de protocole SFE indiquant que le message de service concerne le réseau radio puisque les stations hybrides en font partie intégrante. Puis dans une étape 1050 le module de traitement 7 transmet la trame encapsulée au format du câble (données plus capsule filaire CIC) au module d'émission 3b de l'interface-réseau câblé 3 en vue de l'émission de cette trame de service encapsulée en direction des stations hybrides relais via le câble.

En revanche, si le résultat du test effectué à l'étape 1030 est négatif, c'est-à-dire si le réseau de transmission sélectionné n'est pas le réseau câblé, alors le module de gestion 9 procède dans une étape 1060 à l'encapsulation de la trame de service au format du réseau radio. Cela consiste en l'adjonction de la capsule radio appropriée CR (champs ADI et ASI), le champ ADI spécifiant le mode de traitement (ici par diffusion ou multipoints) et les adresses des stations mobiles relais ou destinataires, et le code ASI comprenant l'adresse de la station hybride dans laquelle le module de gestion 9 se trouve implanté (l'adresse hôte). Puis, dans une étape 1070, le module de traitement 7 transmet la trame encapsulée au format du réseau radio au module d'émission 4b de l'interface-réseau radio 4 en vue de l'émission dans l'éther de cette trame encapsulée en direction des stations mobiles sélectionnées.

On a représenté, à titre d'exemple, sur les figures 3D et 3E, les formats de trames de service destinées à être émises respectivement dans le réseau radio et le réseau câblé.

Les moyens de traitement des dispositifs pourront être avantageusement agencés de façon à permettre un adressage différent dans le réseau radio et le réseau filaire. Ainsi, les trames de service qui transitent sur le câble (réseau filaire auxiliaire) pourront contenir l'adresse radio de la station hybride émettrice (bien entendu, sous réserve qu'elle possède une interface radio), de sorte que les autres stations hybrides puissent effectuer une conversion.

L'invention ne se limite pas au mode de réalisation décrit ci-avant, seulement à titre d'exemple, mais elle s'étend aux variantes que pourra développer l'homme de l'art dans le cadre des revendications ci-après.

Ainsi, dans ce qui précède, on a décrit un réseau principal radio de type CSMA, mais l'invention peut s'appliquer également à d'autres types de réseaux radio, comme par exemple, et de façon non limitative, les réseaux de type TDMA "périodiques", comme le DECT, ou les réseaux à étalement de spectre de type CDMA, ou analogues, mais aussi les combinaisons de ces réseaux.

Par ailleurs, on a décrit une application du dispositif d'interconnexion selon l'invention pour un couplage entre un réseau radio et un réseau câblé. Mais il est clair que le dispositif d'interconnexion selon l'invention peut permettre l'interconnexion entre plusieurs réseaux radio fonctionnant selon des canaux différents, et selon des protocoles différents, ou bien entre un ou plusieurs réseaux radio et un ou plusieurs réseaux câblés (ou filaire). Il est bien évident que dans de telles applications, le nombre d'interfaces-réseaux d'un dispositif d'interconnexion dépendra du nombre de réseaux qu'il est censé interconnecter.

D'autre part, on a décrit un dispositif d'interconnexion muni d'un nombre d'interface-réseau d'émission comme de réémission égal au nombre de réseaux principal et auxiliaire(s). Cependant, l'application s'applique également aux dispositifs d'interconnexion qui ne possèdent pas de telles interfaces-réseaux "directes". Cela pourrait notamment être le cas lorsque le dispositif d'interconnexion est destiné à être implanté dans un routeur IP (pour "Internet Protocol") assurant lui-même l'interface, au niveau du protocole Internet, entre le réseau radio raccordé à des segments de réseaux câblés (pour former ce que l'on a appelé un "réseau radio étendu sur le câble") et le reste des autres réseaux, comme par exemple un réseau filaire classique, le réseau radio étendu sur le câble et les autres réseaux formant alors des sous-réseaux Internet distincts.

Bien entendu, le dispositif d'interconnexion pourrait également être implanté dans une station hybride ne possédant pas d'interface radio (principale) au sens stricte du terme, et ne comportant donc que des interfaces avec le(s) réseau(x) auxiliaire(s). Cela pourrait notamment être le cas lorsque la station hybride est sous un routeur IP (Internet). Dans ce cas, les messages à destination du réseau radio étendu sur le câble seraient systématiquement routés (ou aiguillés) sur le réseau auxiliaire par encapsulation avec un code protocole SFE. Cette application est particulièrement avantageuse lorsque le routeur est situé, géographiquement, à un endroit qui rend inopérante l'interface radio.

De plus, les trames encapsulées illustrées sur les figures 3 présentent des champs et codes (formant un en-tête) donnés dans un certain ordre. Mais il est clair que cet ordre pourra varier selon les applications.

Enfin, on a décrit des mécanismes de traitement de messages de service, permettant la formation de trames au format du réseau câblé et au format du réseau radio, dans lesquels les messages de service étaient présumés être sensiblement identiques, qu'ils concernent le seul réseau câblé ou le seul réseau radio. Mais il est bien évident que les messages de service concernant des types de réseaux différents pourront être différents entre eux. En effet, sur le réseau câblé, il n'est pas utile de vérifier l'état symétrique des liens entre stations voisines, en conséquence de quoi les messages destinés à détecter le voisinage d'une station hybride n'auront pas besoin de contenir la liste des stations que cette station hybride émettrice entend sur le réseau câblé. De même, les tables des stations voisines directes sur le réseau câblé ne nécessitent pas un rafraîchissement fréquent du fait que les stations hybrides ont une mobilité sensiblement plus limitée que celle des stations mobiles.

## Revendications

1. Dispositif d'interconnexion entre au moins des segments d'un réseau "principal" communiquant par voie de messages munis d'une capsule principale répondant à un protocole fondé sur un premier format et au moins un segment d'au moins un réseau "auxiliaire" communiquant par voie de messages munis d'une capsule auxiliaire répondant à un protocole fondé sur un second format, du type comprenant un module de mémorisation (5) propre à stocker au moins une table de routage (6), et un module de traitement (7) propre à gérer des échanges de données en fonction de ladite table de routage (6),
**caractérisé en ce que** le module de traitement (7) comprend un module de gestion (9) propre, d'une part, à retirer la capsule principale d'un message reçu dudit réseau principal de façon à en extraire des informations de routage, puis à comparer lesdites informations à ladite table de routage (6) de façon à choisir, parmi lesdits réseaux principal et auxiliaire (s), au moins un segment de réseau de réémission pour ledit message désencapsulé, et d'autre part, à adjoindre audit message désencapsulé une capsule principale ou une capsule mixte, comportant une capsule principale et une capsule auxiliaire, selon que ledit réseau de réémission choisi est le réseau principal ou un réseau auxiliaire, et le module de gestion (9) est propre à adjoindre au message réencapsulé un code de protocole désignant le format du segment du réseau principal dont est issu ledit message reçu.

2. Dispositif selon la revendication 1, **caractérisé en ce que** le réseau principal est un réseau radio et le(s) réseau(x) auxiliaire(s) est (sont) un (des) réseau(x) filaire(s).

3. Dispositif selon la revendication 1, **caractérisé en ce que** les réseaux principal et auxiliaire(s) sont des réseaux radio.

4. Dispositif selon l'une des revendications 2 et 3, **caractérisé en ce que** le format d'un réseau radio est choisi parmi au moins le format de la norme "HIPERLAN" et le format de la norme IEEE 802.11, et **en ce que** le format d'un réseau filaire est choisi parmi au moins les standards ISO pour les normes IEEE 802.3, 802.5 et 802.14.

5. Dispositif selon l'une des revendications 1 à 2, **caractérisé en ce qu'**en cas de réception d'un message à relayer par au moins un autre dispositif d'interconnexion, dit "intermédiaire", le module de gestion (9) est apte à placer l'adresse dudit dispositif intermédiaire dans la capsule du réseau auxiliaire de réémission choisi.

6. Dispositif selon l'une des revendications 1 à 5, **caractérisé en ce que** le segment de réseau auxiliaire est agencé pour permettre l'utilisation d'adresses de groupe désignant chacune un ensemble prédéterminé de dispositifs d'interconnexion.

7. Dispositif selon l'une des revendications 1 à 6, **caractérisé en ce que** le module de gestion (9) est propre à déterminer le format du réseau principal dans un message muni d'une capsule mixte, de sorte que les informations de routage dudit message ne soient analysées qu'en cas de présence d'un tel format.

8. Dispositif selon la revendication 7 , **caractérisé en ce que** le module de gestion (9) détermine ledit format par détection dudit code de protocole.

9. Dispositif selon l'une des revendications 2 à 8, **caractérisé en ce que** le module de gestion (9) est propre à extraire d'un message dit "de service", issu du réseau principal, des informations de service, relatives à des modifications de ladite table de routage (6) de façon à mettre à jour cette table de routage.

10. Dispositif selon l'une des revendication 1 à 9, **caractérisé en ce que** le module de gestion (9) est agencé pour traiter des message dits "de service" issues de segments de réseaux

11. Dispositif selon la revendication 10, **caractérisé en ce que** lesdits messages de service d'un réseau auxiliaire sont des messages de service du réseau principal munis d'au moins une capsule auxiliaire.

12. Dispositif selon l'une des revendications 6 à 11, **caractérisé en ce que** certains desdits messages de service comportent une adresse de groupe.

13. Dispositif selon l'une des revendications 6 à 12, **caractérisé en ce que** le module de gestion (9) est agencé pour traiter des messages dits "à diffusion" destinés à plusieurs destinataires dudit réseau principal et transitant sur l'un au moins desdits réseaux auxiliaires en utilisant une adresse de groupe.

14. Dispositif selon l'une des revendications précédentes, **caractérisé en ce que** le module de gestion (9) est propre à transmettre à un étage de traitement dit "supérieur" les données contenues dans un message arrivé à destination.

15. Dispositif selon la revendications 14, **caractérisé en ce que** le module de gestion (9) est propre à adjoindre un message créé localement par ledit étage de traitement supérieur, une capsule principale ou une capsule mixte selon ledit segment de réseau de réémission déterminé en fonction de l'adresse de destination dudit message et de ladite table de routage, de façon à émettre ledit message encapsulé dans le segment de réseau de réémission déterminé.

16. Dispositif selon l'une des revendications 9 à 15, **caractérisé en ce que** le module de gestion (9) est apte à commander l'émission de messages de service, non seulement sur requête locale d'un étage supérieur, mais aussi en tant que relais de transmission entre dispositifs d'interconnexion éloignés, pour l'échange d'informations de routage permettant de mettre à jour les tables de routage de chacun.

17. Dispositif selon la revendication 16, **caractérisé en ce que** lesdits messages de service sont destinés à l'échange d'informations de routage pour la mise à jour des tables de routage desdits dispositifs d'interconnexion.

18. Dispositif selon l'une des revendications 16 et 17, **caractérisé en ce que** lesdits moyens de traitement entretiennent au moins une liste des postes des segments de réseau qu'ils reçoivent, et sont aptes à transmettre cette liste sous forme desdits messages de service, ce qui leur permet réciproquement d'entretenir une liste des postes qui les reçoivent à partir des messages de service qu'ils reçoivent.

19. Dispositif selon l'une des revendications 16 à 18, **caractérisé en ce que** les moyens de traitement entretiennent également un directoire topologique désignant au moins une partie des postes avec lesquels ils peuvent communiquer, directement ou indirectement, et définissant le ou les cheminements de cette communication.

20. Dispositif selon la revendication 19, **caractérisé en ce que** les moyens de traitement sont agencés pour optimiser le choix du (ou des) segment(s) d'émission (ou de réémission) en fonction d'au moins un critère prédéterminé.

21. Dispositif selon la revendication 20, **caractérisé en ce que** le critère est choisi en fonction des caractéristiques des.réseaux principal et auxiliaire(s).

22. Procédé d'échange de données, via un dispositif d'interconnexion selon l'une des revendications précédentes, entre au moins des segments d'un réseau "principal" communiquant par voie de messages munis d'une capsule principale répondant à un protocole fondé sur un premier format et au moins un segment d'au moins un réseau "auxiliaire" communiquant par voie de messages munis d'une capsule auxiliaire répondant à un protocole fondé sur un second format, dans lequel on prévoit la mémorisation dans ledit dispositif d'interconnexion d'au moins une table de routage, **caractérisé en ce qu'**il comprend les étapes suivantes :
- retirer la capsule principale d'un message reçu par ledit dispositif d'interconnexion dudit réseau principal de façon à en extraire des informations de routage,
- comparer lesdites informations à ladite table de routage pour choisir, parmi lesdits réseaux principal et auxiliaire(s.), au moins un segment de réseau de réémission pour ledit message désencapsulé, et
- adjoindre audit message désencapsulé une capsule principale ou une capsule mixte, comportant une capsule principale et une capsule auxiliaire, selon que ledit réseau de réémission choisi est le réseau principal ou un réseau auxiliaire, de façon à réémettre ledit message réencapsulé dans le segment de réseau de réémission choisi.

## Claims

1. Device for connection between at least segments of a "main" network communicating by way of messages provided with a main capsule complying with a protocol based on a first format and at least one segment of at least one "ancillary" network communicating by way of messages provided with an ancillary capsule complying with a protocol based on a second format, of the type comprising a storage module (5) able to store at least one routing table (6), and a processing (7) module able to manage data exchanges according to the said routing table (6), **characterised in that** the processing module (7) comprises a management module (9) able on the one hand to disencapsulate a message received from the said main network (to withdraw its main capsule) so as to extract routing information therefrom, then to compare the said information with the said stored routing table (6) in order to choose, from amongst the main and ancillary networks, at least one re-sending network segment for the said disencapsulated message and on the other hand to add to the said disencapsulated message a main capsule or a mixed capsule, including a main capsule and an ancillary capsule, depending on whether the re-sending network chosen is the main network or an ancillary network, and the management module (9) is able to add, to the re-encapsulated message, a protocol code designating the format of the segment of the main network from which the said received message came.

2. Device according to claim 1, **characterised in that** the main network is a radio network and the ancillary network or networks is or are one or more cabled networks.

3. Device according to claim 1, **characterised in that** the main and ancillary networks are radio networks.

4. Device according to one of Claims 2 and 3, **characterised in that** the format of a radio network is chosen from at least the format of the "HIPERLAN" standard and the format of IEEE 802.11, and **in that** the format of a cabled network is chosen from at least the ISO standards for the standards IEEE 802.3, 802.5 and 802.14.

5. Device according to one of Claims 1 to 2, **characterised in that**, in the case of reception of a message to be relayed by at least one other connection device, referred to as "intermediate", the management module (9) is able to place the address of the said intermediate device in the capsule of the chosen ancillary re-sending network.

6. Device according to one of Claims 1 to 5, **characterised in that** the ancillary network segment is arranged so as to permit the use of group addresses each designating a predetermined set of connection devices.

7. Device according to one of Claims 1 to 6, **characterised in that** the management module (9) is able to determine the format of the main network in a message provided with a mixed capsule, so that the routing information for the said message is analysed only in the case of the presence of such a format.

8. Device according to claim 7, **characterised in that** the management module (9) determines the said format by detecting the said protocol code.

9. Device according to one of Claims 2 to 8, **characterised in that** the management module (9) is able to extract, from a so-called "service" message, issuing from the main network, service information relating to modifications to the said routing table (6), so as to update this routing table.

10. Device according to one of Claims 1 to 9, **characterised in that** the management module (9) is arranged to process so-called "service" messages issuing from ancillary network segments.

11. Device according to Claim 10, **characterised in that** the said service messages of an ancillary network are service messages of the main network provided with at least one ancillary capsule.

12. Device according to one of Claims 6 to 11, **characterised in that** some of the said service messages have a group address.

13. Device according to one of Claims 6 to 12, **characterised in that** the management module (9) is arranged to process so-called "broadcast" messages intended for several destinations in the said main network and pass over at least one of the said ancillary networks using a group address.

14. Device according to one of the preceding claims, **characterised in that** the management module (9) is able to transmit, at a so-called "higher" processing stage, the data contained in a message which has arrived at its destination.

15. Device according to Claim 14, **characterised in that** the management module (9) is able to add, to a message created locally by the said higher processing stage, a main capsule or a mixed capsule according to the said re-sending network segment determined according to the destination address of the said message and the said routing table, so as to send the said encapsulated message in the determined re-sending network segment.

16. Device according to one of Claims 9 to 15, **characterised in that** the management module (9) is able to control the sending of service messages, not only at local request of a higher stage, but also as a transmission relay between distant connection devices, for exchanging routing information for updating the routing tables of each one.

17. Device according to Claim 16, **characterised in that** the said service messages are intended for the exchange of routing information for updating the routing tables of the said interconnection devices.

18. Device according to one of Claims 16 and 17, **characterised in that** the said processing means maintain at least one list of stations of the network segments which they receive, and are able to transmit this list in the form of the said service messages, which enables then mutually to maintain a list of the stations which receive them from the service messages which they receive.

19. Device according to one of Claims 16 to 18, **characterised in that** the processing means also maintain a topological directory designating at least some of the stations with which they can communicate, directly or indirectly, and define the route or routes of this communication.

20. Device according to Claim 19, **characterised in that** the processing means are arranged to optimize the choice of the sending (or re-sending) segment or segments as a function of at least one predetermined criterion.

21. Device according to Claim 20, **characterised in that** the criterion is chosen according to the characteristics of the main and ancillary networks.

22. Method of exchanging data, via a connection device according to one of the preceding claims, between at least segments of a "main" network communicating by way of messages provided with a main capsule complying with a protocol based on a first format and at least one segment of at least one "ancillary" network communicating by way of messages provided with an ancillary capsule complying with a protocol based on a second format, in which storage is provided in the said connection device of at least one routing table,
**characterised in that** it comprises the following steps:
- withdrawing the main capsule of a message received by the connection device of the main network so as to extract routing information therefrom,
- comparing the information extracted from the routing table stored in order to choose, from amongst the said main and ancillary networks, at least one re-sending network segment for the said disencapsulated message, and
- adding a disencapsulated message to a main capsule or a mixed capsule, including a main capsule and an ancillary capsule, depending on whether the chosen re-sending network is the main network or an ancillary network, so as to re-send the re-encapsulated message in the chosen re-sending network segment.

## Patentansprüche

1. Vorrichtung zur Verbindung zwischen wenigstens Segmenten eines durch Mitteilungen kommunizierenden "Hauptnetzes", die eine Hauptkapsel umfassen, die mit einem auf einem ersten Format beruhenden Protokoll antwortet, und wenigstens ein Segment wenigstens eines durch Mitteilungen kommunizierenden "Hilfsnetzes", die eine Hilfskapsel umfassen, die mit einem auf einem zweiten Format beruhenden Protokoll antwortet, des Typs, der einen zur Speicherung einer Routing-Tabelle (6) fähigen Speichermodul (5) umfasst sowie einen Verarbeitungsmodul (7), fähig Datenaustausche in Abhängigkeit von der genannten Routing-Tabelle (6) zu verwalten,
**dadurch gekennzeichnet, dass** der Verarbeitungsmodul (7) einen Verwaltungsmodul (9) umfasst, fähig einerseits einer empfangenen Mitteilung des genannten Hauptnetzes die Hauptkapsel zu entnehmen, um aus ihr Routinginformationen zu extrahieren, dann diese Informationen mit der genannten Routingtabelle (6) zu vergleichen, um unter Hauptnetz und Hilfsnetz(en) wenigstens ein Netzsegment zur Wiederaussendung der genannten entkapselten bzw. kapsellosen Mitteilung auszuwählen, und andererseits der genannten entkapselten bzw. kapsellosen Mitteilung eine Hauptkapsel oder eine eine Hauptkapsel und eine Hilfskapsel umfassende Mischkapsel beizugeben, abhängig davon, ob das gewählte Wiederaussendungsnetz das Hauptnetz oder ein Hilfsnetz ist, und dabei der Verwaltungsmodul (9) fähig ist, der wieder eine Kapsel enthaltenden Mitteilung einen Protokollcode beizuordnen, der das Format des Segments des Hauptnetzes bezeichnet, von dem die genannte empfangene Mitteilung stammt.

2. Vorrichtung nach Anspruch 1, **dadurch gekennzeichnet, dass** das Hauptnetz ein Funknetz ist und das (die) Hilfsnetz(e) ein Kabelnetz (Kabelnetze).

3. Vorrichtung nach Anspruch 1, **dadurch gekennzeichnet, dass** Hauptnetz und Hilfsnetz(e) Funknetze sind.

4. Vorrichtung nach einem der Ansprüche 2 und 3, **dadurch gekennzeichnet, dass** das Format eines Funknetzes ausgewählt wird zwischen wenigstens dem Format der "Hiperlan"-Norm und dem Format der Norm IEEE 802.11, und **dadurch**, dass das Format eines Kabelnetzes ausgewählt wird unter wenigstens den ISO-Standards für die Normen IEEE 802.3, 802.5 und 802.14.

5. Vorrichtung nach einem der Ansprüche 1 bis 2, **dadurch gekennzeichnet, dass** im Falle des Empfangs einer durch wenigstens eine Zwischenvorrichtung genannte andere Verbindungsvorrichtung zu übertragenden Mitteilung der Verwaltungsmodul (9) fähig ist, die Adresse der genannten Zwischenvorrichtung in der Kapsel des gewählten Wiederaussendungs-Hilfsnetzes zu platzieren.

6. Vorrichtung nach einem der Ansprüche 1 bis 5, **dadurch gekennzeichnet, dass** das Hilfsnetzsegment eingerichtet ist, um die Verwendung von Gruppenadressen zu ermöglichen, von denen jede eine bestimmte Menge von Verbindungseinrichtungen bezeichnet.

7. Vorrichtung nach einem der Ansprüche 1 bis 6, **dadurch gekennzeichnet, dass** der Verwaltungsmodul (9) fähig ist, das Format des Hauptnetzes in einer durch eine Mischkapsel gelieferten Mitteilung zu bestimmen, so dass die Routinginformationen der genannten Mitteilung nur im Falle der Präsenz eines solchen Formats analysiert werden.

8. Vorrichtung nach Anspruch 7, **dadurch gekennzeichnet, dass** der Verwaltungsmodul (9) das genannte Format durch Detektion des genannten Protokollcodes bestimmt.

9. Vorrichtung nach einem der Ansprüche 2 bis 8, **dadurch gekennzeichnet, dass** der Verwaltungsmodul (9) fähig ist, einer vom Hauptnetz stammenden sogenannten "Dienstmitteilung" Modifikationen der Routingtabelle (6) betreffende Dienstinformationen zu entnehmen, um diese Routingtabelle zu aktualisieren.

10. Vorrichtung nach einem der Ansprüche 1 bis 9, **dadurch gekennzeichnet, dass** der Verwaltungsmodul (9) eingerichtet ist, um Mitteilungen der von Hilfsnetzsegmenten stammenden sogenannten Dienstmitteilungen zu verarbeiten.

11. Vorrichtung nach Anspruch 10, **dadurch gekennzeichnet, dass** die genannten Dienstmitteilungen eines Hilfsnetzes mit wenigstens einer Hilfskapsel ausgestattete Dienstmitteilungen des Hauptnetzes sind.

12. Vorrichtung nach einem der Ansprüche 6 bis 11, **dadurch gekennzeichnet, dass** Bestimmte der genannten Dienstnachrichten eine Gruppenadresse umfassen.

13. Vorrichtung nach einem der Ansprüche 6 bis 12, **dadurch gekennzeichnet, dass** der Verwaltungsmodul (9) eingerichtet ist, um sogenannte "Streumitteilungen" zu verarbeiten, die für mehrere Empfänger des genannten Hauptnetzes bestimmt sind und wenigstens eines der genannten Hilfsnetze passieren, indem sie eine Gruppenadresse benutzen.

14. Vorrichtung nach einem der vorangehenden Ansprüche, **dadurch gekennzeichnet, dass** der Verwaltungsmodul (9) fähig ist, die in einer beim Empfänger eingetroffenen Mitteilung enthaltenen Daten zu einer sogenannten "höheren" Verarbeitungsstufe zu übertragen.

15. Vorrichtung nach Anspruch 14, **dadurch gekennzeichnet, dass** der Verwaltungsmodul (9) fähig ist, einer durch die genannte höhere Verarbeitungsstufe lokal erzeugten Mitteilung eine Hauptkapsel oder eine Mischkapsel gemäß dem genannten Wiederaussendungs-Netzsegment hinzuzufügen, bestimmt in Abhängigkeit von der Empfängeradresse der genannten Mitteilung und der genannten Routingtabelle, um die genannte verkapselte Mitteilung in dem bestimmten Wiederaussendungs-Netzsegment zu senden.

16. Vorrichtung nach einem der Ansprüche 9 bis 15, **dadurch gekennzeichnet, dass** der Verwaltungsmodul (9) fähig ist, das Senden von Dienstmitteilungen zu steuern, nicht nur auf lokale Anfrage einer höheren Stufe, sondern auch als Übertragungsrelais zwischen entfernten Verbindungsvorrichtungen für den Austausch von Routinginformationen, die ermöglichen, die Routingtabellen von jeder zu aktualisieren.

17. Vorrichtung nach Anspruch 16, **dadurch gekennzeichnet, dass** die genannten Dienstmitteilungen für den Austausch von Routinginformationen zur Aktualisierung der Routingtabellen der genannten Verbindungsvorrichtungen bestimmt sind.

18. Vorrichtung nach einem der Ansprüche 16 und 17, **dadurch gekennzeichnet, dass** die genannten Verarbeitungseinrichtungen wenigstens eine Liste der Stationen bzw. Geräte der Netzsegmente unterhält, die sie empfangen, und fähig sind, diese Liste in Form der genannten Dienstmitteilungen zu übertragen, was ihnen umgekehrt ermöglicht, eine Liste der Stationen bzw. Geräte zu unterhalten, die sie aufgrund der Dienstmitteilungen erhalten, die sie empfangen.

19. Vorrichtung nach einem der Ansprüche 16 bis 18, **dadurch gekennzeichnet, dass** die Verarbeitungseinrichtungen auch eine topologische Leiteinrichtung unterhalten, die wenigstens einen Teil der Stationen bzw. Geräte bezeichnet, mit denen sie direkt oder indirekt kommunizieren können und die den (oder die) Weg(e) dieser Kommunikation definieren.

20. Vorrichtung nach Anspruch 19, **dadurch gekennzeichnet, dass** die Verarbeitungseinrichtungen fähig sind, die Wahl des Segments (oder der Segmente) zum Senden oder (Wiederaussenden) in Abhängigkeit von wenigstens einem vorherbestimmten Kriterium zu optimieren.

21. Vorrichtung nach Anspruch 20, **dadurch gekennzeichnet, dass** das Kriterium ausgewählt wird in Abhängigkeit von den Charakteristika von Hauptnetz und Hilfsnetz(en).

22. Verfahren zum Austausch von Daten über eine Vorrichtung nach einem der vorangehenden Ansprüche zur Verbindung zwischen wenigstens Segmenten eines durch Mitteilungen kommunizierenden "Hauptnetzes", die eine Hauptkapsel umfassen, die mit einem auf einem ersten Format beruhenden Protokoll antwortet, und wenigstens ein Segment wenigstens eines durch Mitteilungen kommunizierenden "Hilfsnetzes", die eine Hilfskapsel umfassen, die mit einem auf einem zweiten Format beruhenden Protokoll antwortet, wobei man in diesem Verfahren die Speicherung von wenigstens einer Routingtabelle in der genannten Zwischenverbindungsvorrichtung vorsieht,
**dadurch gekennzeichnet, dass** es die folgenden Schritte umfasst:
- einer durch die genannte Verbindungsvorrichtung empfangenen Mitteilung die Hauptkapsel zu entnehmen, um aus ihr Routinginformationen zu extrahieren,
- der genannten entkapselten bzw. geöffneten Mitteilung eine Hauptkapsel oder eine eine Hauptkapsel und eine Hilfskapsel umfassende Mischkapsel beizugeben, abhängig davon, ob das gewählte Wiederaussendungsnetz das Hauptnetz oder ein Hilfsnetz ist, um die genannte verkapselte Mitteilung in dem gewählten Wiederaussendungs-Netzsegment wieder zu senden.
